# EUROPÄISCHE PATENTSCHRIFT

(11) **EP 3 286 348 B1**
(45) Veröffentlichungstag und Bekanntmachung des Hinweises auf die Patenterteilung: **25.07.2018**
(21) Anmeldenummer: 17724799.6
(22) Anmeldetag: 17.05.2017
(51) Int. Cl.: C22C 9/04

(54) **BLEIFREIE SONDERMESSINGLEGIERUNG SOWIE SONDERMESSINGLEGIERUNGSPRODUKT**
LEAD FREE BRASS ALLOY AND ALLOY PRODUCT
ALLIAGE DE LAITON ET PRODUIT D'ALLIAGE

(30) Priorität: 20.05.2016 DE 202016102696 U
(43) Veröffentlichungstag der Anmeldung: 28.02.2018
(73) Patentinhaber: Otto Fuchs - Kommanditgesellschaft -, 58540 Meinerzhagen (DE)
(72) Erfinder: GUMMERT, Hermann, 41751 Viersen (DE); PLETT, Thomas, 57392 Schmallenberg (DE); REETZ, Björn, 47800 Krefeld (DE)
(74) Vertreter: Haverkamp, Jens
(86) Internationale Anmeldenummer: PCT/EP2017/061815
(87) Internationale Veröffentlichungsnummer: WO 2017/198698

(56) Entgegenhaltungen:
- EP-A2- 1 712 648
- EP-A2- 2 135 964
- WO-A1-2014/152619
- WO-A2-2015/173291
- DE-A1- 2 718 495

## Beschreibung

Die Erfindung betrifft eine bleifreie Sondermessinglegierung und ein Produkt aus einer Sondermessinglegierung, das einer Reibbelastung unterliegt.

Für typische Reibanwendungen in einer Schmiermittelumgebung werden generell niedrige Reibwerte der verwendeten Legierung gefordert, wobei zusätzlich der Reibwert in vorgegebenen Grenzen an die jeweilige Anwendung, insbesondere den Reibpartner, den verwendeten Schmierstoff und die Reibbedingungen, wie Anpressdruck und Relativgeschwindigkeit, anpassbar sein sollte. Dies gilt für Kolbenbuchsen, auf die hohe statische und dynamische Lasten wirken, ebenso wie für Synchronringe. Des Weiteren fordern Anwendungen mit hohen Relativgeschwindigkeiten der Reibpartner, wie sie beispielsweise für Axiallager eines Turboladers vorliegen, Legierungen, die neben einer reduzierten Wärmeentwicklung auch eine gute Wärmeableitung von der Reibfläche sicherstellen.

Durch die Reibleistung und den Ölkontakt entsteht auf der Lagerfläche eine tribologische Schicht mit angelagerten Schmiermittelkomponenten. Dabei wird eine gleichmäßige und zugleich hohe Anlagerungsrate der Schmiermittelbestandteile und deren Abbauprodukte gefordert, um an der Gleitschicht eine hinreichend stabile Adsorptionsschicht zu erhalten.

Ferner zeichnet sich ein geeigneter Werkstoff für ein in einer Ölumgebung eingesetztes Bauteil, beispielsweise einen Synchronring oder ein Lagerteil für ein Lager in einer solchen Umgebung zusätzlich durch eine breitbandige Ölverträglichkeit aus, sodass der Aufbau der tribologischen Schicht weitgehend unempfindlich gegen die Wahl bestimmter Öladditive ist. Zudem soll ein aus einer solchen Legierung hergestelltes Bauteil gute Notlaufeigenschaften aufweisen, sodass eine hinreichende Standzeit auch unter Trockenreibungsbedingungen sichergestellt werden kann.

Für reibbelastete Bauteile ist zusätzlich wichtig, dass die eingesetzte Legierung eine hinreichende Festigkeit aufweist. Entsprechend sollte eine hohe 0,2 %-Dehngrenze vorliegen, um die unter Last auftretenden plastischen Verformungen möglichst gering zu halten. Ungeachtet dessen soll ein solches Bauteil ein gewisses Maß für eine plastische Verformung oberhalb der Dehngrenze bis zu einem Versagen aufweisen.

Zusätzlich wird für derartige Bauteile gefordert, dass diese besonders hart und zugfest sind, um deren Widerstand gegen abrasive und adhäsive Belastungen zu erhöhen. Zugleich wird eine ausreichende Zähigkeit als Schutz gegen stoßende Beanspruchungen verlangt. In diesem Zusammenhang wird gefordert, die Anzahl der Mikrodefekte zu verringern und das von diesen ausgehende Defektwachstum zu verlangsamen. Dies geht einher mit der Forderung, eine Legierung mit einer möglichst hohen Bruchzähigkeit anzugeben, die weitgehend frei von Eigenspannungen ist.

Geeignete Legierungen für reibbeanspruchte Bauteile sind vielfach Sondermessinge, die neben Kupfer und Zink als Hauptbestandteile eine Zulegierung wenigstens eines der Elemente Nickel, Eisen, Mangan, Aluminium, Silizium, Titan oder Chrom aufweisen. Dabei erfüllen insbesondere Siliziummessinge die voranstehend genannten Anforderungen, wobei CuZn31Si1 eine Standardlegierung für Reibanwendungen, etwa für Kolbenbuchsen, darstellt. Ferner ist bekannt, Zinnbronzen, die neben Zinn und Kupfer zusätzlich Nickel, Zink, Eisen und Mangan aufweisen, für Reibanwendung oder auch für den Bergbau einzusetzen.

Aus WO 2014/152619 A1 ist eine Messinglegierung zur Verwendung in Turboladerlageranwendungen bekannt. Diese ist mit 1,5 bis 3,0 Gew.-% sehr manganhaltig, verfügt hingegen nur über einen geringen Sn-Anteil, und zwar von weniger als 0,4 Gew.-%. Diese vorbekannte Messinglegierung lässt einen Pb-Gehalt von maximal 0,1 Gew.-% zu, wodurch diese Legierung den strengeren Anforderungen an eine Pb-Freiheit genügt. Blei (Pb) als Legierungsbestandteil wird jedoch gerne in Messinglegierungen eingebaut, da hierdurch ein Spanbruch begünstigt und daher eine spanende Bearbeitung verbessert ist. Zudem ist Blei als Korrosionsinhibitor typischerweise in hochfeste Messinglegierungen eingebaut, deren Legierungsprodukte in einer Ölumgebung zum Einsatz gelangen. Dieses gilt vor allem für solche Ölumgebungen, die mit Bio-Ethanol in Kontakt gelangen. Bio-Ethanol ist im Kraftstoff von Fahrzeugen enthalten und gelangt beispielsweise durch Undichtigkeiten in den Kolbenringen oder anderweitige Verschleppungen in das Motoröl. Dieses gilt insbesondere für solche Fahrzeuge, die vermehrt nur auf Kurzstrecken zum Einsatz gelangen und somit der Motor seine Betriebstemperatur nicht erreicht. Gleiches gilt für Turboladerlagerungen, die infolge des in den Abgasen enthaltenen Bioethanols und seiner Abfallprodukte einem aggressiven Gemisch ausgesetzt sind. Infolgedessen stellt sich in dem Öl ein saures Milieu ein. Zusammen mit dem in dem Öl enthaltenen Schwefel bildet sich mit dem in dem Legierungsprodukt enthaltenen Blei eine Bleisulfatdeckschicht aus. Dieses wirkt ähnlich einer Passivierungsschicht und wirkt daher als Korrosionsinhibitor.

Einfluss auf die mechanische Belastbarkeit und auch die Korrosionsbeständigkeit hat auch das Gefüge einer solchen Messinglegierung, die in der Matrix unterschiedliche Phasen aufweisen kann. Messinglegierungsprodukte mit einem hohen Anteil an α-Phase zeichnen sich durch eine allgemein gute Korrosionsbeständigkeit, eine hohe Zähigkeit und Bruchdehnung und eine gute Kaltumformbarkeit aus. Nachteilig ist, dass derartige Legierungsprodukte ein eher schlechtes Warmumformvermögen sowie einen geringen Widerstand gegen Abrasion und Adhäsion aufweisen. Messinglegierungsprodukte mit β-Phase weisen hingegen einen hohen mechanischen Verschleißwiderstand, eine hohe Festigkeit, eine gute Warmumformbarkeit und eine geringe Adhäsion aus. Nachteilig ist bei diesen Legierungsprodukten jedoch eine relativ schlechte Kaltumformbarkeit, eine relativ geringe Zähigkeit sowie eine deutlich schlechtere Korrosionsbeständigkeit, verglichen mit einem Messinglegierungsprodukt mit α-Phase. Messingslegierungsprodukte mit γ-Phase zeichnet sich zwar durch eine gute Korrosionsbeständigkeit und einen guten mechanischen Verschleißwiderstand auf, haben jedoch eine geringe Zähigkeit und ein relativ geringes Umformvermögen zum Nachteil. Somit zeigt sich, dass jede Phase zwar Vorteile in dem einen oder anderen Sektor mit sich bringt, jedoch Nachteile in Kauf genommen werden müssen.

Bei Messinglegierungsprodukten der in Rede stehenden Art, die in einer Ölumgebung eingesetzt werden spielt, wie bereits angedeutet, auch die Korrosion eine Rolle. Insofern muss eine Legierung, aus der Legierungsprodukte gefertigt werden, die beispielsweise in einer Ölumgebung im Rahmen eines Axiallagers zum Einsatz gelangen, auch den diesbezüglichen Anforderungen genügen.

Auf einem Werkstück aus einer Kupferlegierung entsteht unter Reibbelastung bereits nach einer kurzen Kontaktzeit zum Schmiermittel eine Adsorptionsschicht, die vor allem aus Schmiermittelzusätzen besteht. Bei einer thermomechanischen Belastung bildet sich unter der Adsorptionsschicht eine Reaktionsschicht aus miteinander reagierenden Komponenten der Adsorptionsschicht und oberflächennahen Legierungsbestandteilen. Dabei bilden die Adsorptionsschicht und die Reaktionsschicht eine äußere Grenzschicht auf dem Kupferlegierungswerkstück, die von einer mehreren Mikrometer dicken, inneren Grenzschicht unterlagert ist. Aufgrund ihrer Nähe zur äußeren Grenzschicht wird diese sowohl durch die auf die Oberfläche wirkende mechanische Belastung als auch durch die chemischen Umwandlungsprozesse in der Reaktionsschicht beeinflusst. Im Bereich der inneren Grenzschicht können Diffusionsprozesse und Oxidationsvorgänge der Substratlegierung die Reaktionsschichtbildung beeinflussen.

Viele Schmierstoffe beinhalten Additive, wie schwefel- und phosphorhaltiger Zusätze, die bei entsprechender thermomechanischen Belastung durch den Reibkontakt korrosiv wirken können, was wiederum die Lebensdauer eines Werkstückes nicht unbeträchtlich herabsetzt. Es wurden bereits Kupferlegierungen vorgeschlagen, um die korrosive Wirkung von Schwefelbestandteilen im Schmiermittel zu reduzieren. Aus der JP S 60162742 A ist eine Kupferlegierung für die Lagerung eines Turboladers bekannt, die bezogen auf die Gewichtsanteile aus 57 - 61 % Cu, 2,5 - 3,5 % Pb besteht, wobei Fe und Zn als Verunreinigungen vorliegen können. Auf der Reibfläche soll sich eine stabile CuS-Schicht ausbilden.

Vielfach werden Schmierstoffen Additive mit der Zielsetzung zugegeben, die Korrosion auf einer Reibfläche zu verringern und den abrasiven Verschleiß zu mindern. Ein Beispiel eines solchen Korrosionsinhibitors (Anti-Wear-Wirkstoffs) stellt beispielsweise Zinkdialkyldithiophosphat dar. In der Reaktionsschicht bildet sich aus diesem Zuschlag ein die Oberfläche schützendes Phosphatglas. Hierzu findet idealerweise ein Austausch der Liganden des Additivs mit Legierungselementen sowie eine Einlagerung von Substratkationen statt, sodass sich eine belastbare Reaktionsschicht bildet.

Allerdings hängen die Oberflächen schützenden Reaktionsprozesse von der Zusammensetzung der inneren Grenzschicht des Substratmaterials ab. Des Weiteren beeinflussen zusätzliche Additive den Prozess, da sie in der Adhäsionsschicht unter Umständen bezüglich der Anhaftung konkurrierend zu den Oberflächen schützenden Additiven wirken. Zusätzlich beachtlich sind das Legierungsgefüge, thermische Vorgänge der Reaktionsschicht im Hinblick auf die Wärmeableitung und lokale Temperaturspitzen für Schichtauf- und -abbauprozesse. Daher kann es in Abhängigkeit des jeweils vorliegenden tribiologischen Systems unter Umständen mit Beteiligung von Korrosionsinhibitoren sogar zu einem unerwünschten chemischen Abbauprozess der Reibschicht kommen.

Der Erfindung liegt somit die Aufgabe zu Grunde, eine Sondermessinglegierung vorzuschlagen, aus der nicht nur Produkte hergestellt werden können, die sich durch eine hohe Festigkeit, einen reduzierten Verschleiß unter Reibbelastung sowie guten Notlaufeigenschaften bei Mangelschmierung auszeichnen und die einfach aufgebaut ist, sondern die zugleich bleifrei bzw. praktisch bleifrei sein können, um den gesetzlichen Anforderungen an eine Bleifreiheit zu genügen und dennoch auch in einem sauren Milieu korrosionsbeständig sind.

Gelöst wird diese Aufgabe erfindungsgemäß durch eine bleifreie Sondermessinglegierung mit folgenden Legierungsbestandteilen:
50 - 65 Gew.-% Cu;
0,4 - 3 Gew.-% Mn, insbesondere 1 - 3 Gew.-% Mn;
0,55 - 3 Gew.-% Sn;
max. 1 Gew.-% Fe;
max. 1 Gew.-% Ni;
max. 1 Gew.-% Al;
max. 1,5 Gew.-% Si;
und Rest Zn nebst unvermeidbaren Verunreinigungen,
wobei die Summe der Elemente Mn und Sn mindestens 1,3 Gew.-% und maximal 6,0 Gew.-% beträgt.

Als unvermeidbare Verunreinigungen werden im Rahmen dieser Ausführungen solche Elemente angesehen, die einzeln an der Legierung mit nicht mehr als 0,05 Gew.-% und in Summe nicht mehr als 0,15 Gew.-% ausmachen.

Bei dieser Sondermessinglegierung ist es gelungen, nicht nur eine einfach konzipierte Sondermessinglegierung zur Verfügung zu stellen, sondern ebenfalls, dass die daraus hergestellten Legierungsprodukte in besonderer Weise eine hohe Korrosionsbeständigkeit, eine Kalt- und Warmumformbarkeit, einen hohen mechanischen Verschleißwiderstand sowie eine hohe Zähigkeit aufweisen. Das Gefüge dieser Sondermessinglegierung enthält α- und β-Phasen. Zudem zeichnet sich diese Sondermessinglegierung durch ein gutes Einbettvermögen von Abriebpartikeln in einer belasteten Oberfläche, beispielsweise einer Lageroberfläche oder einer Reiboberfläche aus. Daher eignen sich aus dieser Sondermessinglegierung hergestellte Legierungsprodukte vor allem in einem Einsatz in einer Ölumgebung, auch in saurem Milieu.

Die besondere Korrosionsbeständigkeit war überraschend bei dieser sehr einfach konzipierten Sondermessinglegierung in Erfahrung zu bringen, da der herrschenden Meinung folgend, auf Blei zur Ausbildung einer korrosionsinhibierenden Deckschicht nicht zu verzichten sein soll. Die besondere Korrosionsbeständigkeit bei einem Einsatz in säurehaltigen Ölumgebungen von Legierungsprodukten aus dieser Legierung in einer Ölumgebung wird an den Gehalten der Elemente Mn und Sn festgemacht. Untersuchungen haben gezeigt, dass es nicht nur auf die Beteiligung dieser Elemente ankommt, wobei Mn und Sn Legierungsbestandteile sind, und zwar in Summe zumindest mit 1,3 Gew.-%, jedoch in Summe nicht mehr als 6 Gew.-% überschreiten. Untersuchungen haben gezeigt, dass die gewünschten Eigenschaften sich an den Sondermessinglegierungsprodukten nicht in hinreichendem Maße einstellen, wenn die Summe der Legierungselemente Mn und Sn kleiner als 1,3 Gew.-% und größer als 6,0 Gew.-% ist. Dieses war insbesondere, was die obere Grenze anbegeht, nicht zu erwarten. Vorzugsweise beträgt die Summe der Elemente Mn und Sn mehr als 2,0 Gew.-% und nicht mehr als 4,5 Gew.-%.

Es ist vorteilhaft, wenn gemäß einer ersten Ausgestaltung der Mn-Gehalt und der Sn-Gehalt in einer ähnlichen Größenordnung am Aufbau der Legierung beteiligt sind, mithin die Gehalte dieser beiden Elemente um vorzugsweise nicht mehr als 20 % - 30 % voneinander abweichen. Gemäß einer anderen Ausgestaltung ist der Mn-Gehalt größer als der Sn-Gehalt, wobei der Mn-Gehalt maximal doppelt so hoch ist wie der Sn-Gehalt. Vorzugsweise ist der Mn-Gehalt bei dieser Ausgestaltung um etwa 60 - 85 % größer als der Sn-Gehalt.

Bei dieser Sondermessinglegierung handelt es sich um eine Pb-freie Sondermessinglegierung, insbesondere im Sinne der Altautorichtlinie.

Bei der beanspruchten Legierung wird der Mn-Gehalt genutzt, um das Existenzgebiet der α-Phase auszuweiten. Dieses führt dazu, dass das in der Legierung ebenfalls enthaltene Sn nicht vorzeitig in einer γ-Phase gebunden wird, sondern ebenso wie das Mn für die gewünschte Deckschichtbildung zur Verfügung steht. Zudem wird Sn auch für die gewünschten Notlaufeigenschaften benötigt. Aus diesem Grunde ist eine sorgfältige Abstimmung in der Beteiligung der Elemente Mn und Sn wie vorstehend dargelegt in der Legierung vorgenommen worden.

Das Gefüge der Sondermessinglegierungsprodukte, hergestellt aus dieser Legierung, weist α-Phasen-Körner in einer β-Matrix auf. Bei den Siliziden handelt es sich vornehmlich um Mn-Fe-Silizide, die in dem Gefüge dispers verteilt sind und einen Anteil von etwa 2 bis 4 % aufweisen. Der Querschnittsdurchmesser der Silizide liegt zwischen 5 µm und 20 µm, wobei sich diese Größenangabe auf die Breite der Silizide bezieht. Wenn die Sondermessinglegierungsprodukte stranggepresste Produkte sind, sind die Silizide oftmals gestreckt mit einem Längen-zu-Breitenverhältnis von mitunter 10:1 bis 15:1.

Überraschend waren die guten Korrosionseigenschaften eines aus dieser Legierung hergestellten Legierungsproduktes auch deswegen, da Pb nicht grundsätzlich durch ein zusätzlich anderes Element ersetzt worden ist. Vielmehr wurden die guten korrosionsbeständigen Eigenschaften durch eine Erhöhung des Sn-Gehaltes sowie durch die bereits vorstehend angegebene interne Abstimmung vor allem mit dem Element Mn erreicht.

Zu begründen ist die erhöhte Widerstandsfähigkeit eines aus dieser Legierung hergestellten Bauteils in Bezug auf Korrosionsbeanspruchungen auch damit, dass die aus dieser Legierung hergestellten Bauteile nur eine geringe elektrische Leitfähigkeit aufweisen, die im Bereich derjenigen der Referenzlegierungen liegt. Somit sind elektrische Korrosionsströme gegenüber vorbekannten Legierungen dieser Art deutlich verringert. Die elektrische Leitfähigkeit der aus dieser Sondermessinglegierung hergestellten Sondermessinglegierungsprodukte ist kleiner als 12 MS/m. Je nach Ausgestaltung der Sondermessinglegierung kann die elektrische Leitfähigkeit des daraus hergestellten Sondermessinglegierungsproduktes sogar unter 9 MS/m liegen.

Für die benötigten Notlaufeigenschaften, welches ein aus dieser Legierung hergestelltes Legierungsprodukt als Teil eines Lagers aufweisen soll, ist der Sn-Anteil maßgeblich verantwortlich. Somit kommt dem Legierungselement Sn im Rahmen dieser Legierung eine Doppelfunktion zu, namentlich Korrosionsschutz und Notlaufeigenschaften der Legierung.

Ein aus dieser Legierung hergestelltes Bauteil, welches einer üblichen Wärmebehandlung unterworfen ist, genügt in besonderem Maße vor allem den an ein solches Bauteil gestellten Festigkeitswerten, auch hinsichtlich der 0,2 %-Dehngrenze. Dieses ist besonders vorteilhaft für eine geometrische Anpassung der Reibpartner bei einem ersten Betrieb. Bei einem Axiallager handelt es sich hierbei um lokale mikroplastische Verformungen, damit die zusammenwirkenden Reibpartner sich hinsichtlich ihrer Oberflächengeometrie einander anpassen. Zugleich ist die Oberfläche eines aus dieser Legierung hergestellten Bauteils weich genug, um den Anforderungen an eine Einbettfähigkeit von Fremdpartikeln zu genügen. Hierdurch ist es in besonderer Weise möglich, Fremdpartikel gezielt dadurch unschädlich zu machen, dass diese in die Bauteil- oder Werkstückoberfläche eingebettet werden.

Aufgrund der vorbeschriebenen Eigenschaften eines aus dieser Legierung hergestellten Legierungsproduktes handelt es sich bei diesen Legierungsprodukten typischerweise um Teile von Axiallagern oder von Radiallagern. Gemäß einer bevorzugten Ausgestaltung sind Axiallagerteile aus dieser Legierung im Wege eines Schmiedeprozesses hergestellt worden. Legierungsprodukte als Radiallagerteile sind hingegen bevorzugt gepresst oder gezogen. Ein typisches Anwendungsbeispiel für ein Lagerbauteil aus dieser Legierung ist ein Turboladerlager.

Die bereits vorstehend beschriebenen positiven Eigenschaften dieser Legierung lassen sich verbessern, wenn gemäß einer ersten Ausgestaltung die Sondermessinglegierung folgende Zusammensetzung aufweist:
56 - 62 Gew.-% Cu;
1,5 - 2,3 Gew.-% Mn, insbesondere 1,6 - 2,3 Gew.-% Mn;
1,4 - 2,2 Gew.-% Sn, insbesondere 1,5 - 2,2 Gew.-% Sn;
0,1 - 0,7 Gew.-% Fe, insbesondere 0,5 - 0,7 Gew.-% Fe;
max. 0,3 Gew.-% Ni, insbesondere max. 0,1 Gew.-% Ni;
max. 0,5 Gew.-% Al oder max. 0,7 Gew.-% Al;
0,25 - 0,85 Gew.-% Si;
und Rest Zn nebst unvermeidbaren Verunreinigungen.

Bezüglich dieser Sondermessinglegierungsvariante lassen sich interessanterweise sehr vergleichbare Ergebnisse erzielen, wenn gemäß einer ersten diesbezüglichen Ausgestaltung die Sondermessinglegierungen folgende Elemente in den angegebenen Anteilen umfasst:
57 - 61,5 Gew.-% Cu;
1,7 - 2,2 Gew.-% Mn, insbesondere 1,5 - 2,2 Gew.-% Mn;
1,5 - 2,1 Gew.-% Sn;
0,1 - 0,7 Gew.-% Fe, insbesondere 0,25 - 0,6 Gew.-% Fe;
max. 0,3 Gew.-% Ni, insbesondere max. 0,1 Gew.-% Ni
max. 0,5 Gew.-% oder max. 0,7 Gew.-% Al, insbesondere 0,05 - 0,25 Gew.-% Al;
0,3 - 0,7 Gew.-% Si;
und Rest Zn nebst unvermeidbaren Verunreinigungen
und wenn gemäß einer weiteren Sondermessinglegierungsvariante diese folgenden Chemismus aufweist:
57 - 61,5 Gew.-% Cu;
1,7 - 2,2 Gew.-% Mn, insbesondere 1,5 - 2,2 Gew.-% Mn;
0,6 - 1,2 Gew.-% Sn;
0,1 - 0,7 Gew.-% Fe, insbesondere 0,25 - 0,6 Gew.-% Fe;
max. 0,1 Gew.-% Ni;
max. 0,5 Gew.-% oder max. 0,7 Gew.-% Al, insbesondere
0,05 - 0,25 Gew.-% Al;
0,3 - 0,7 Gew.-% Si;
und Rest Zn nebst unvermeidbaren Verunreinigungen.

Während bei der ersten Sondermessinglegierungsvariante der Mn-Gehalt und der Sn-Gehalt eine sehr ähnliche Größenordnung aufweisen, ist bei der zweiten Sondermessinglegierungsvariante dieses Typs der Mn-Gehalt deutlich größer als der Sn-Gehalt. Bei der erstgenannten Sondermessinglegierungsvariante liegt das Mn zu Sn-Verhältnis zwischen 1,15 und 0,95, insbesondere zwischen 1,1 und 0,97. Bei dieser Sondermessinglegierungsvariante ist vorzugsweise der Mn-Gehalt nur geringfügig größer als der Sn-Gehalt, und zwar vorzugsweise etwa 9 - 12 % größer. Bei der vorgenannten zweiten Sondermessinglegierungsvariante ist das Verhältnis der Legierungselemente Mn und Sn vorzugsweise eingestellt, dass das Verhältnis von Mn zu Sn in dem Bereich 1,9 bis 1,65, insbesondere in dem Bereich 1,82 bis 1,74 liegt. Betont ist bei dieser Sondermessinglegierungsvariante der gegenüber dem Sn-Gehalt höhere Mn-Gehalt.

Bei den vorbeschriebenen Sondermessinglegierungsvarianten beträgt der Fe-Gehalt vorzugsweise 0,3-0,5 Gew.-%.

Bei diesen beiden Legierungsvarianten beträgt der Anteil der α-Phase 50 bis 70%, sodass der Anteil der β-Phase einen Anteil von 30 bis 50 % ausmacht. Aus den vorstehenden Angaben ist die Beteiligung der Silizide herausgerechnet.

Ein weiterer Typ der in Anspruch 1 beanspruchten Sondermessinglegierung umfasst folgende Elemente:
52 - 59 Gew.-% Cu;
1,5 - 2,7 Gew.-% Mn;
0,55 - 2,5 Gew.-% Sn;
0,1 - 1 Gew.-% Fe;
max. 0,3 Gew.-% Ni, insbesondere max. 0,1 Gew.-% Ni;
max. 0,3 Gew.-% oder max. 0,7 Gew.-% Al;
max. 0,2 Gew.-% Al;
0,15 - 1 Gew.-% Si;
und Rest Zn nebst unvermeidbaren Verunreinigungen.

Auch bezüglich dieses Typs der Sondermessinglegierung kann diese in zwei Varianten unterteilt werden, die prinzipiell gleiche Legierungseigenschaften aufweisen. Eine erste Legierungsvariante ist eine solche, bei der der Mn-Gehalt deutlich größer ist als der Sn-Gehalt und diese Legierung folgende Zusammensetzung aufweist:
53 - 59 Gew.-% Cu;
1,6 - 2,5 Gew.-% Mn;
0,5 - 1,4 Gew.-% Sn;
0,1 - 1 Gew.-% Fe;
max. 0,3 Gew.-% Ni, insbesondere max. 0,1 Gew.-% Ni;
max. 0,3 Gew.-% oder max. 0,7 Gew.-% Al, max. 0,2 Gew.-% Al;
0,15 - 1 Gew.-% Si;
und Rest Zn nebst unvermeidbaren Verunreinigungen.

Bei der weiteren Variante ist der Mn-Gehalt in etwa so hoch wie der Sn-Gehalt. Diese Legierung weist folgende Zusammensetzung mit den nachfolgend angegebenen Anteilen der an der Legierung beteiligten Elemente auf:
53 - 59 Gew.-% Cu;
1,6 - 2,5 Gew.-% Mn;
1,2 - 2,2 Gew.-% Sn;
0,1 - 1 Gew.-% Fe;
max. 0,1 Gew.-% Ni;
max. 0,3 Gew.-% oder max. 0,7 Gew.-% Al, max. 0,2 Gew.-% Al;
0,15 - 1 Gew.-% Si;
und Rest Zn nebst unvermeidbaren Verunreinigungen.

Auch bei diesen Sondermessinglegierungen sind die Mn- und Sn-Gehalte in besonderer Weise aufeinander abgestimmt. Bei der ersten Sondermessinglegierungsvariante, bei der der Mn-Gehalt deutlich höher ist als der Sn-Gehalt, liegt das Verhältnis von Mn zu Sn in dem Bereich zwischen 1,9 bis 1,65, vorzugsweise in dem Bereich zwischen 1,85 und 1,7. Bei der zweiten Sondermessinglegierung dieses Typs ist das Mn- und Sn-Verhältnis ausgeglichener. Vorzugsweise liegt das Mn zu Sn-Verhältnis bei dieser Variante zwischen 1,25 und 1,0, insbesondere zwischen 1,18 und 1,1.

In einer besonders bevorzugten Ausgestaltung dieser Sondermessinglegierung ist Pb kein aktiv in die Legierung eingebrachtes Legierungselement, sondern wird in die Legierungsschmelze nur durch Einsatz von Recyclingmaterial eingebracht. Es ist dabei darauf zu achten, dass die gewünschten Pb-Maximalgehalte nicht überschritten werden.

Bei diesen Legierungsvarianten ist der Anteil der β-Phase als Matrix größer als bei den zuvor beschriebenen Varianten. Der Gehalt an β-Phase (Matrix) liegt bei 60 bis 85 %. Die in die β-Phase eingebetteten α-Phasen-Körner haben einen Anteil zwischen 15 und 40 %. Auch bei diesen Anteilsangaben ist der Anteil der Silizide herausgerechnet.

Typischer Weise bestehen die vorgenannten Varianten der beanspruchten Sondermessinglegierung ausschließlich aus den genannten Legierungsbestandteilen. Die Aufzählung der Legierungsbestandteile bei der Sondermessinglegierung und ihren vorgestellten Varianten sind sodann als abschließende Aufzählungen zu verstehen.

Ein Sondermessinglegierungsprodukt hergestellt aus dem vorstehend beschriebenen weiteren Typ - gleiches gilt auch für den zuerst beschriebenen Legierungstyp - zeichnet sich durch eine Besonderheit beim Glühen zum Aushärten des Sondermessinglegierungsproduktes aus. Von Besonderheit ist, dass ein solches Sondermessinglegierungsprodukt zwei Aushärtestufen bei unterschiedlichen Temperaturen aufweist. Zwischen diesen beiden Aushärtetemperaturbereichen liegt ein Temperaturbereich, in dem nach Erreichen der ersten Aushärtestufe das Material des Sondermessinglegierungsproduktes wieder weicher wird, bevor bei weiterer Temperaturerhöhung die zweite Aushärtestufe erreicht wird. Die erste Aushärtestufe beginnt bei etwa 440°C - 470 °C und hat ihr Maximum zwischen 450°C und 480°C. Die zweite Aushärtestufe beginnt bei etwa 580°C - 620°C und erreicht ein Maximum bei 650°C - 670 °C oder höher. Die Sondermessinglegierung kann so eingestellt sein, dass das höher temperierte Aushärtemaximum eine signifikant höhere Härte aufweist als das erste, bei niedrigerer Temperatur erreichte Aushärtemaximum. So kann die Legierung beispielsweise dergestalt eingestellt werden, dass ein erstes Aushärtemaximum bei einer Temperatur von etwa 470°C mit einer Härte von etwa 150 - 160 nach Brinell (HB 2,5/62,5) erzielt werden kann, während beginnend mit einer Temperatur von etwa 650 °C das zweite Aushärtemaximum ist einer Härte von etwa 170 bis 180 HB 2,5/62,5 oder mehr erreicht wird. Die höhere Festigkeit in der zweiten Aushärtestufe wird daran festgemacht, dass bei höheren Glühtemperaturen die Hartphasenausscheidungen, insbesondere Silizide, eine kleinere Korngröße aufweisen. Dieses kann auch als Ausscheidungshärtung angesprochen werden. Das zwischen diesen Maxima liegende Zwischenerweichungstemperaturfenster, bei dem die Härte typischerweise wieder unter 150 HB 2,5/62,5 sinkt, kann für bestimmte Bearbeitungsschritte genutzt werden, beispielsweise dann, wenn eine Bearbeitung des Sondermessinglegierungsproduktes im warmen Zustand günstiger als im kalten Zustand ist. Dann kann das sich zwischen den Aushärtemaxima befindliche Temperaturfenster genutzt werden, um beispielsweise Bearbeitungswerkzeuge zu schonen.

Aus der Sondermessinglegierung gemäß dieser Erfindung können Legierungsprodukte als fertig bearbeitete Gußteile, Schmiedeteile, fertig bearbeitete Strangpress-Halbezeuge oder als gepresst und gezogene Produkte hergestellt werden. Wenn gewünscht, kann eine Abschlussglühung bei diesen Legierungsprodukten vorgesehen sein.

In ihren Varianten unterscheiden sich die Sondermessinglegierungen dieses Typs hinsichtlich ihrer Kalt- und Warmformeigenschaften, sodass man in Abhängigkeit von dem vorgesehenen Fertigungsverfahren die eine oder die andere Legierungsvariante einsetzen wird. Die Kalt- und Warmformeigenschaften eines aus der Legierung hergestellten Halbzeuges sind maßgeblich abhängig von dem Kupferanteil bzw. dem Zinkäquivalent und der dem α-/β-Phasengemisch. Dieses verdeutlicht, dass ohne die Legierung maßgeblich ändern zu müssen, sich allein durch eine Variation dieser Elemente unterschiedliche Umformeigenschaften einstellen lassen. Neben den unterschiedlichen Umformeigenschaften, die sich mit dieser Basislegierung einstellen lassen, können diese auch bezüglich ihrer mechanischen Festigkeitswerte (Zugfestigkeit, Dehngrenze) den gewünschten Anforderungen entsprechend eingestellt werden. Von Vorteil ist hierbei, dass dieses mit ein und derselben Basislegierung möglich ist.

Nachfolgend ist die Erfindung anhand von konkreten Ausführungsbeispielen beschrieben. Verwiesen wird hierbei auf die beiliegenden Figuren. Es zeigen:
- **Fig. 1:**: lichtmikroskopische Aufnahmen der Oberfläche eines ersten Probestückes aus einer ersten Legierung,
- **Fig. 2:**: vier rasterelektronische Aufnahmen der Probe der Figur 1,
- **Fig. 3:**: die rasterelektronischen Aufnahmen der Bilder 2 und 3 der Figur 2 mit den gekennzeichneten Bereichen, an denen EDX-Analysen durchgeführt wurden,
- **Tab. 1:**: die EDX-Analysen der Probenpunkte der Figur 3,
- **Fig. 4:**: Mikrofotografien einer Probe aus der ersten Legierung der vorangegangenen Figuren nach Durchführen eines Korrosionstestes,
- **Fig. 5:**: Mikrofotografien von Proben, die demselben Korrosionstest unterworfen worden sind aus einer ersten Vergleichslegierung,
- **Fig. 6:**: Mikrofotografien von Proben, die demselben Korrosionstest unterworfen worden sind aus einer zweiten Vergleichslegierung,
- **Fig. 7:**: lichtmikroskopische Aufnahmen der Oberfläche einer Probe aus einer zweiten Legierung,
- **Fig. 8:**: zwei rasterelektronische Aufnahmen der Probe der Figur 7,
- **Fig. 9:**: eine rasterelektronische Aufnahmen der Probe der Figur 8 (Bild 1) mit den gekennzeichneten Bereichen, an denen EDX-Analysen durchgeführt wurden,
- **Tab. 2:**: die EDX-Analysen der Probenpunkte der Figur 9.
- **Fig. 10:**: ein Aushärtungsdiagramm der Gussprobe der zweiten Legierung,
- **Fig. 11:**: Mikrofotografien einer Probe aus der zweiten Legierung nach Durchführen eines Korrosionstestes,
- **Fig. 12:**: eine lichtmikroskopische Aufnahme der Oberfläche eines ersten Probestückes aus einer dritten Legierung,
- **Fig. 13:**: drei rasterelektronische Aufnahmen der Probe der Figur 12,
- **Fig. 14:**: eine rasterelektronische Aufnahme des Bildes 2 der Figur 13 mit den gekennzeichneten Bereichen, an denen EDX-Analysen durchgeführt wurden,
- **Tab. 3:**: die EDX-Analysen der Probenpunkte der Figur 14,
- **Fig. 15:**: ein Aushärtungsdiagramm der Gussprobe der dritten Legierung,
- **Fig. 16:**: Mikrofotografien einer Probe aus der dritten Legierung nach Durchführen eines Korrosionstestes,
- **Fig. 17:**: eine lichtmikroskopische Aufnahme der Oberfläche einer Probe aus einer vierten Legierung,
- **Fig. 18:**: zwei rasterelektronische Aufnahmen der stranggepressten Probe der Figur 17,
- **Fig. 19:**: eine rasterelektronische Aufnahme an der Proben der Figur 18 (Bild 2) mit den gekennzeichneten Bereichen, an denen EDX-Analysen durchgeführt wurden,
- **Tab. 4:**: die EDX-Analysen der Probenpunkte der Figur 19,
- **Fig. 20:**: ein Aushärtungsdiagramm der Gussprobe der vierten Legierung,
- **Fig. 21:**: zwei Gefügebilder zum Darstellen des Gefüges einer Probe der vierten Legierung in unterschiedlichen Aushärtemaxima und
- **Fig. 22:**: Mikrofotografien einer Probe aus der vierten Legierung nach Durchführen eines Korrosionstestes.

### Versuch 1:

In einer ersten Versuchsreihe wurden aus einer Legierung folgender Zusammensetzung:

| | Cu | Mn | Sn | Fe | Ni | Al | Si | Zn |
|---|---|---|---|---|---|---|---|---|
| Probe 1 | 59,5 | 2,0 | 1,8 | 0,4 | 0,05 | 0,05 | 0,5 | Rest |

Probestücke gegossen.

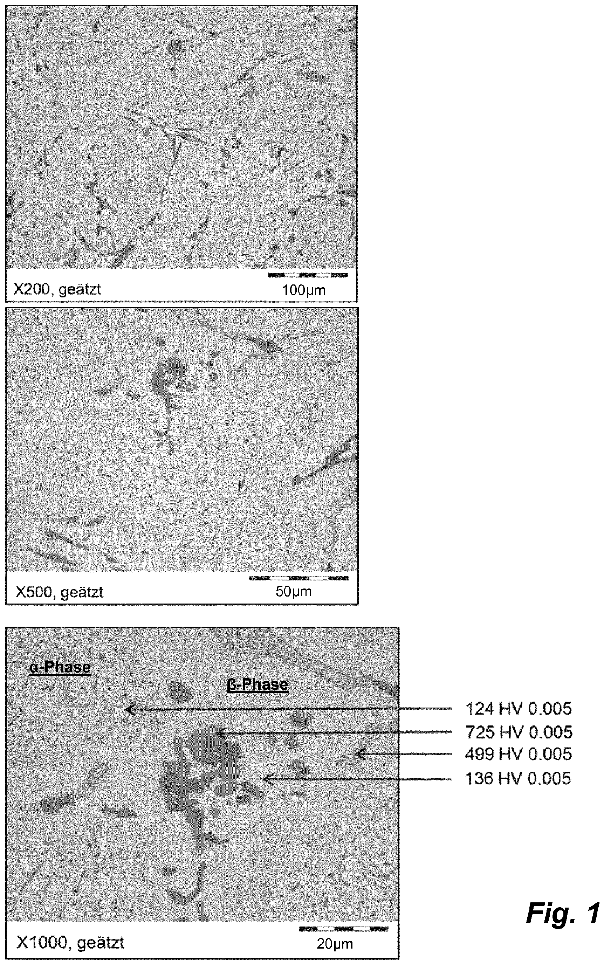

Die in Figur 1 gezeigten lichtmikroskopischen Aufnahmen der Gussprobe zeigen ein α-β-Matrix-Gefüge mit γ-Phase und Siliziden.

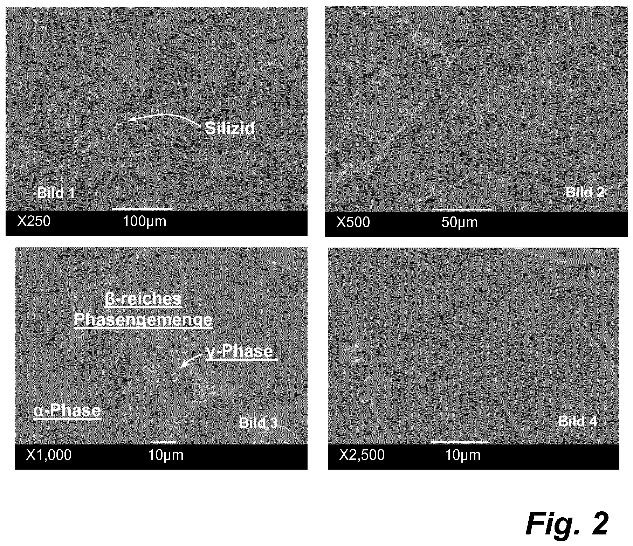

Die in Figur 2 wiedergegebenen rasterelektronenmikroskopischen Aufnahmen der Probe lassen die nur geringe Größe der Ausscheidungen erkennen. Diese Ausscheidungen zeigen Größen von etwa 10µm.

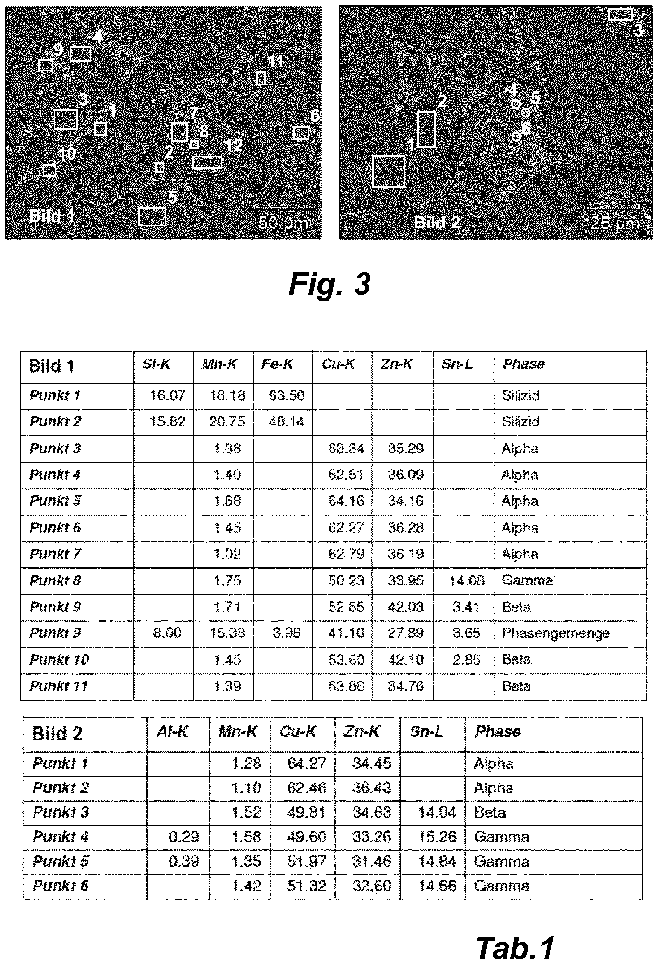

An den Bildern 2 und 3 der rasterelektronenmikroskopischen Aufnahmen der Figur 2 wurden EDX-Analysen durchgeführt. Die Bereiche, in denen die EDX-Analysen aufgenommen worden sind, in Figur 3 kenntlich gemacht und in Tabelle 1 wiedergegeben.

An der Probe wurden Härteuntersuchungen durchgeführt, und zwar in Bezug auf die Makrohärte und die Mikrohärte. Die Makrohärte wurde nach Brinell gemessen und führt zu einem Ergebnis von 109 HB 2,5/62,5. Die Mikrohärte wurde nach Vickers ermittelt. In der Matrix wurde eine Vickers-Härte von 124 - 136 HV 0.005 ermittelt. Die intermetallischen Phasen sind naturgemäß sehr viel härter. Bei einer ersten intermetallischen Phase wurde eine Vickers-Härte von 499 HV 0.005 und bei einer zweiten intermetallischen Phase eine höhere Härte von 725 HV 0.005 festgestellt.

Diese Probe zeigt insgesamt ein sehr feines Gefüge, eine hohe Festigkeit und Härte. Diese Probe weist eine gute Kaltumformbarkeit auf.

Die Probe wurde zusammen mit Referenzproben Korrosionstests unterworfen.

Zum Zwecke der Korrosionstests wurden die Proben zur Hälfte eingetaucht in ein Gemisch aus Motoröl, 20% Bioethanol E85 (85% Ethanol) und Schwefelsäure. Der ph-Wert war auf 2,6 eingestellt. Die Versuche wurden bei 60°C durchgeführt. Die Probe wurde in diesem Gemisch 2 Tage gehalten, anschließend ausgebaut und lichtmikroskopisch ausgewertet.

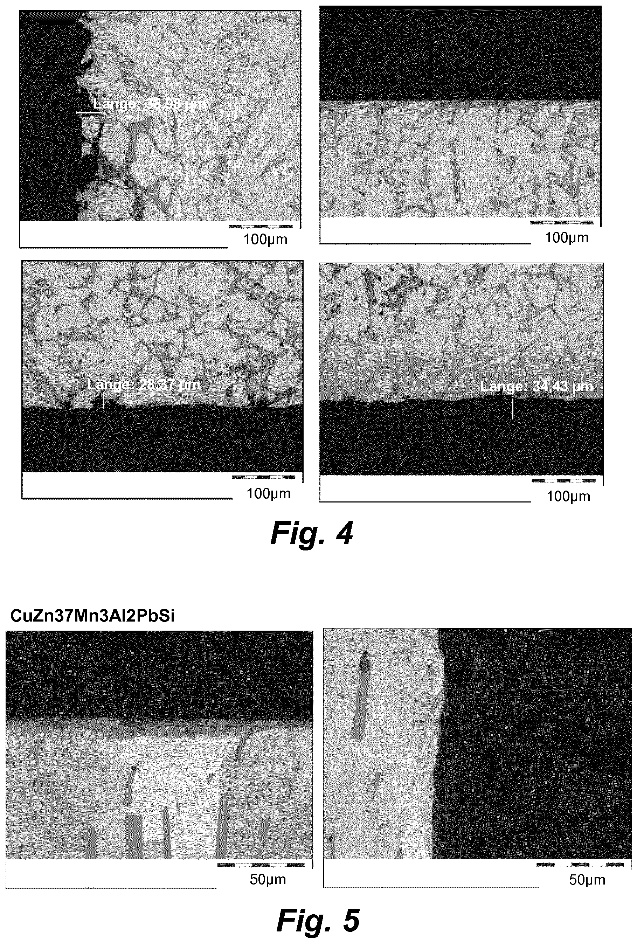

Figur 4 zeigt jeweils den dem Korrosionstest unterworfene Probenanteil. Die lichtmikroskopischen Aufnahmen der Figur 4 zeigen nur vereinzelt einen sehr geringen lokalen Korrosionsangriff. Damit ist tieferliegendes Material wirksam vor Korrosion verschont. An der Oberfläche konnten Deckschichtrückstände detektiert werden. Hervorzuheben ist, dass nicht nur die α-Phase, sondern auch die Korngrenzen und die β-Phase korrosionsresistent sind.

Figur 5 zeigt das Ergebnis einer Vergleichsprobe aus der Legierung CuZn37Mn3Al2PbSi, die mit denselben Parametern hergestellt und korrosionsgetestet worden ist. Deutlich erkennbar ist eine lokale Lagenbildung (vor allem linkes Bild).

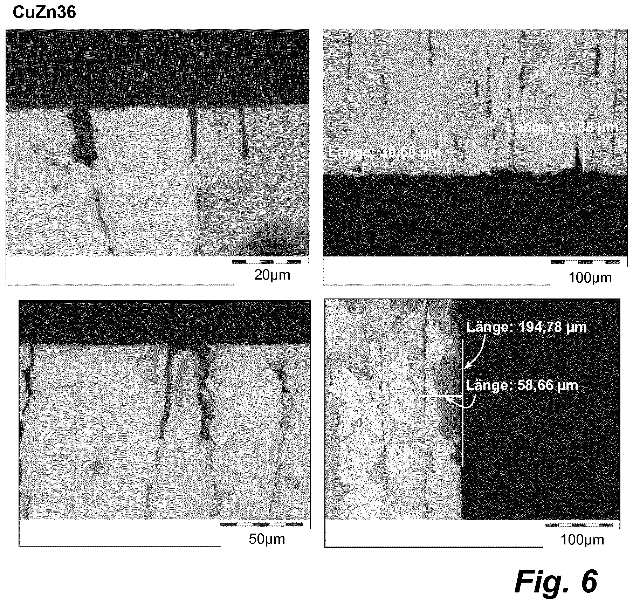

Als Referenzprobe wurde auch eine solche aus der Legierung CuZn36 mit denselben Parametern hergestellt und korrosionsgetestet (siehe Figur 6). Bei dieser Probe ist die Entstehung von Korrosionsrissen und eine Propfenentzickung zu beobachten.

Das rechte Bild in der unteren Reihe der Figur 6 wurden zusätzlich in reiner hochkonzentrierter Schwefelsäure behandelt.

Die elektrische Leitfähigkeit dieser Probe beträgt 8 MS/m und entspricht daher der elektrischen Leitfähigkeit der Referenzlegierung CuZn37Mn3Al2 PbSi. Erheblich reduziert ist die elektrische Leitfähigkeit dieser Probe gegenüber der elektrischen Leitfähigkeit der anderen Referenzprobe, die eine elektrische Leitfähigkeit von etwa 15,5 MS/m aufweist.

### Versuch 2:

In einer zweiten Versuchsreihe wurden aus einer Legierung folgender Zusammensetzung:

| | Cu | Mn | Sn | Fe | Ni | Al | Si | Zn |
|---|---|---|---|---|---|---|---|---|
| Probe 2 | 59,5 | 2,0 | 0,9 | 0,4 | 0,05 | 0,05 | 0,5 | Rest |

Probestücke gegossen und stranggepresst.

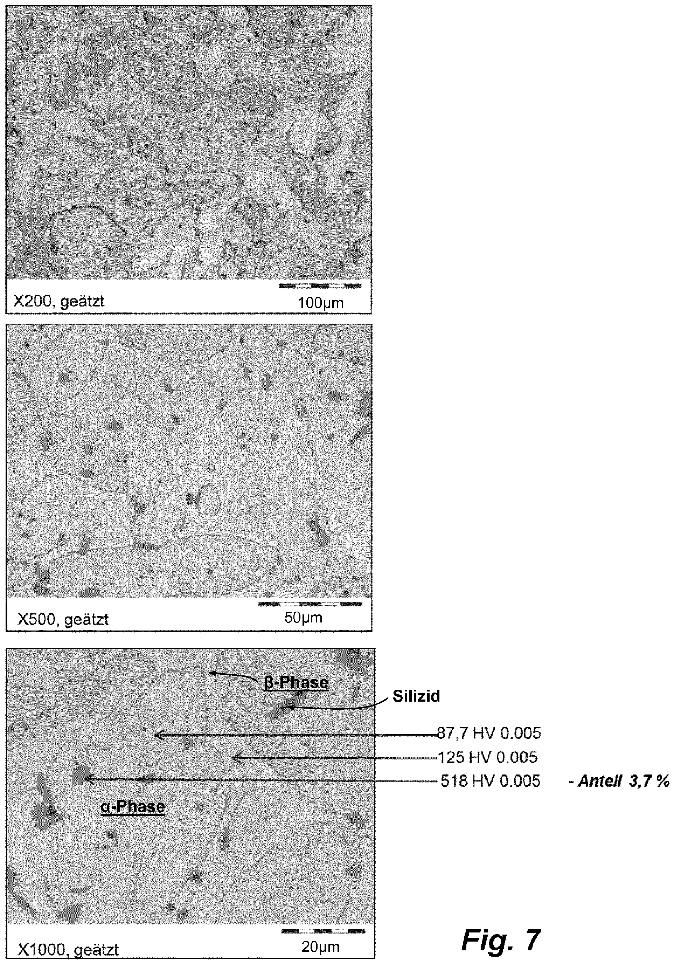

Die in Figur 7 wiedergegebenen lichtmikroskopischen Aufnahmen der Probe zeigen eine β-α-Matrix mit eingelagerten Siliziden. Der Anteil intermetallischer Phasen - hier: Silizide - beträgt etwa 3,7%.

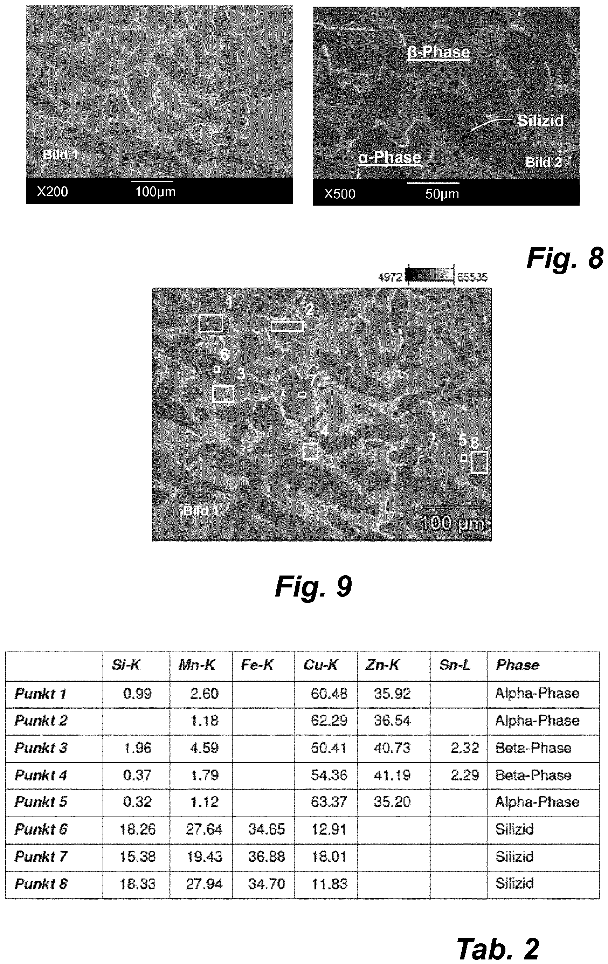

Die in Figur 8 wiedergegebenen rasterelektronenmikroskopischen Aufnahmen von der Probe lassen die nur geringe Größe der Ausscheidungen erkennen. Die Silizide weisen Größen zwischen 8 und 12µm auf. Die α-Phase ist in der gezeigten Schnittrichtung gelängt und weist Korngrößen in Längserstreckung von etwa 100 - 120µm auf.

Figur 9 zeigt eine rasterelektronenmikroskopische Aufnahme an Bereichen der Proben der Figur 8 (Bild 1). Die Bereiche, in denen die EDX-Analysen aufgenommen worden sind, sind in Figur 9 kenntlich gemacht und in Tabelle 2 wiedergegeben.

Im Ergebnis kann festgestellt werden, dass Mangan überwiegend in den α- und β-Phasen abgebunden ist, während Zinn in der β-Phase gelöst ist.

An dieser Probe wurden Härteuntersuchungen durchgeführt, und zwar in Bezug auf die Makrohärte und die Mikrohärte. Die Makrohärte wurde nach Brinell gemessen und führt zu einem Ergebnis von 96 HB 2,5/62,5. Die Mikrohärte wurde nach Vickers ermittelt. In der Matrix wurde eine Vickers-Härte von 88 HV 0.005 in der α-Phase und von 125 HV 0.005 in der β-Phase ermittelt. Die intermetallischen Phasen sind naturgemäß sehr viel härter. Hier wurden Härten von etwa 518 HV 0.005 ermittelt.

An einer stranggepressten Probe wurden ebenfalls Härteuntersuchungen durchgeführt, und zwar in Bezug auf die Makrohärte und die Mikrohärte. Die Makrohärte wurde nach Brinell gemessen und führt zu einem Ergebnis von 86 - 100 HB 2,5/62,5. Die Mikrohärte wurde nach Vickers ermittelt. In der Matrix wurde eine Vickers-Härte von 86 HV 0.005 in der α-Phase und von 122 HV 0.005 in der β-Phase ermittelt. Die intermetallischen Phasen sind naturgemäß sehr viel härter. Hier wurden Härten von etwa 707 HV 0.005 ermittelt.

An der stranggepressten Probe wurden Zerreißtests zum Ermitteln von Festigkeitswerten durchgeführt. Untersuchungen wurden an Proben des Pressanfanges und des Pressendes durchgeführt. Auf diese Weise erhält man Aussagen über die sich einstellenden Festigkeitswerte in Abhängigkeit von der Presstemperatur. Typischerweise ist die Presstemperatur am Anfang des Pressvorganges etwas höher als beim Pressen des Endbereiches einer solchen Probenstange. Die untersuchten Proben der stranggepressten Stange führten zu folgenden Festigkeitswerten:

| Rp0,2 | Rm | A |
|---|---|---|
| [N/mm²] | [N/mm²] | [%] |
| 150-220 | 430-470 | 30-40 |

Die Schwankungsbreiten in den vorstehenden Angaben beruhen auf den Unterschieden in der Probenlage - Pressanfang bzw. Pressende. Bei diesem Ausführungsbeispiel resultieren die höheren Zugfestigkeitswerte von den Proben vom Pressende, während die niedrigeren Werte von Proben aus dem Pressanfang entstammen. Bei der Bruchdehnung bei dieser Probe verhält es sich umgekehrt. Die niedrigeren Werte entstammen Proben vom Pressende.

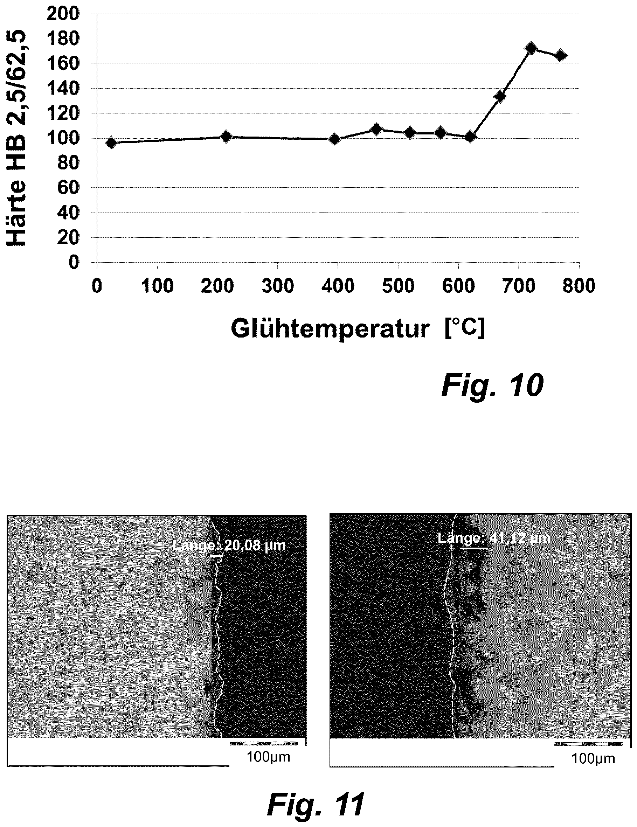

Figur 10 zeigt das Aushärtungsverhalten beim Glühen der aus dieser Legierung hergestellten Probe. Die Proben wurden auf Temperatur geheizt, zum Zwecke einer Durcherwärmung gehalten und dann wieder an Luft abgekühlt. Das Glühtemperaturdiagramm lässt deutlich werden, dass ein Aushärtungsmaximum bei etwa 730°C gegeben ist.

Diese Probe zeigt insgesamt ein sehr feines Gefüge, eine hohe Festigkeit und Härte. Diese Probe weist eine gute Kaltumformbarkeit auf.

Die Probe wurde zusammen mit Referenzproben Korrosionstests unterworfen. Die Korrosionstests wurden durchgeführt, wie dieses bereits zu dem Versuch 1 erläutert ist. Als Referenzproben dienten dieselben Referenzproben wie bei dem Versuch 1. Diesbezüglich wird auf die Figuren 5 und 6 und die begleitenden Ausführungen verwiesen.

Figur 11 zeigt zwei lichtmikroskopische Fotografien der Probe aus der zweiten Legierung nach der Korrosionsbehandlung. Eine Deckschichtbildung ist zu beobachten (siehe linkes Bild). Die Deckschicht ist gut haftend. Lediglich vereinzelt wurde ein leichter lokaler Korrosionsangriff festgestellt. Damit bleibt tieferliegendes Material vor Korrosion wirksam verschont. Neben der α-Phase sind auch bei dieser Probe die Korngrenzen und die β-Phase korrosionsresistent.

Die elektrische Leitfähigkeit dieser Probe beträgt 8,7 MS/m und entspricht daher der elektrischen Leitfähigkeit der Referenzlegierung CuZn37Mn3Al2 PbSi. Erheblich reduziert ist die elektrische Leitfähigkeit dieser Probe gegenüber der elektrischen Leitfähigkeit der anderen Referenzprobe, die eine elektrische Leitfähigkeit von etwa 15,5 MS/m aufweist.

### Versuch 3:

In einer ersten Versuchsreihe wurden aus einer Legierung folgender Zusammensetzung:

| | Cu | Mn | Sn | Fe | Ni | Al | Si | Zn |
|---|---|---|---|---|---|---|---|---|
| Probe 3 | 55,5 | 2,0 | 0,9 | 0,4 | 0,05 | 0,05 | 0,5 | Rest |

Probestücke gegossen und stranggepresst.

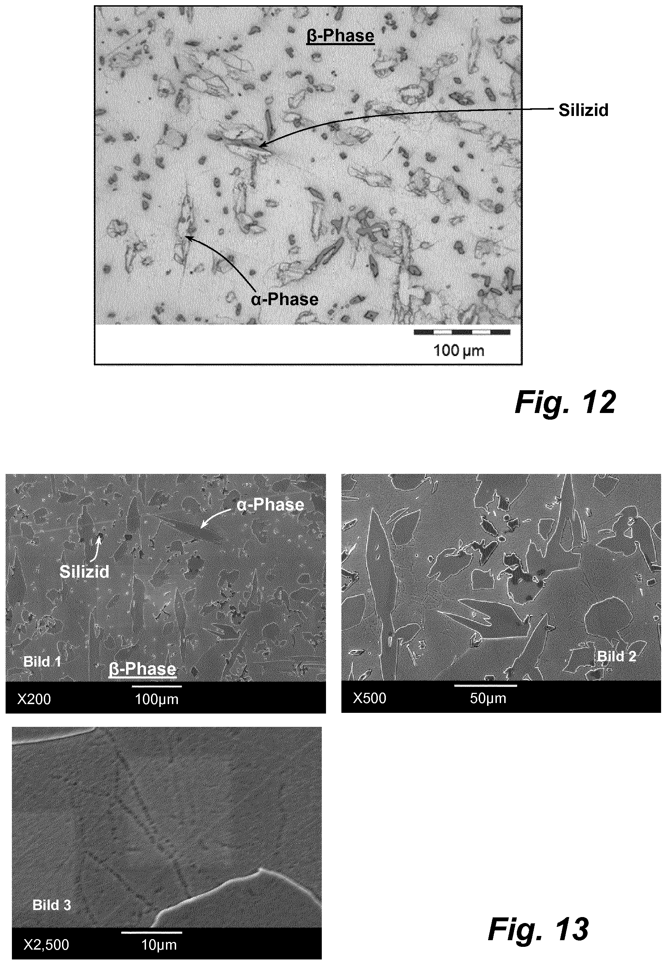

Die in Figur 12 gezeigte lichtmikroskopische Aufnahme der Gussprobe zeigt ein Gefüge aus β-Phase mit eingelagerter α-Phase und Siliziden. Die Silizide weisen in der gezeigten Schliffebene eine langgestreckte Form auf mit einer Breite von etwa 10µm. Die α-Phase weist ebenfalls langgestreckte Körner auf mit einer Längserstreckung von etwa 60 - 70µm.

Diese Legierung eignet sich besonders zum Herstellen von Legierungsprodukten, die warm umgeformt werden sollen.

Die in Figur 13 wiedergegebenen rasterelektronenmikroskopischen Aufnahmen der Probe lassen das Gefüge und die nur geringe Größe der Ausscheidungen erkennen.

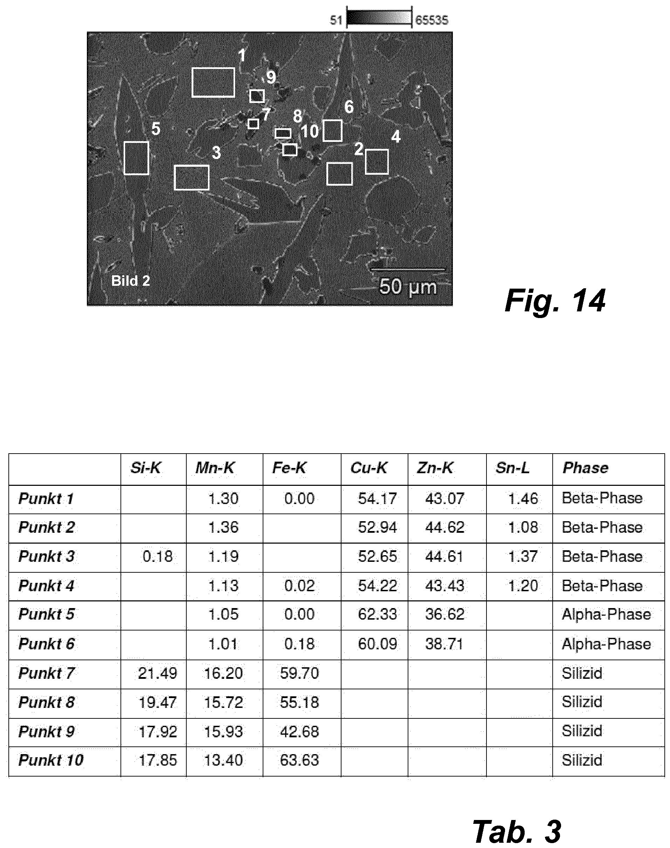

An dem Bild 2 der rasterelektronenmikroskopischen Aufnahmen der Figur 13 wurden EDX-Analysen durchgeführt. Die Bereiche, in denen die EDX-Analysen aufgenommen worden sind, in Figur 14 kenntlich gemacht und in Tabelle 1 wiedergegeben.

Im Ergebnis kann festgestellt werden, dass Mangan überwiegend in der α- und der β-Phase abgebunden ist, während Zinn in der β-Phase gelöst ist.

An einer stranggepressten Probe wurden Härteuntersuchungen durchgeführt, und zwar in Bezug auf die Makrohärte und die Mikrohärte. Die Makrohärte wurde nach Brinell gemessen und führt zu einem Ergebnis von 113 - 122 HB 2,5/62,5. Die Mikrohärte wurde nach Vickers ermittelt. In der Matrix wurde eine Vickers-Härte von 82 HV 0.005 in der α-Phase und von 155 HV 0.005 in der β-Phase ermittelt. Die intermetallischen Phasen sind naturgemäß sehr viel härter. Hier wurden Härten von etwa 980 HV 0.005 ermittelt.

An der stranggepressten Probe wurden Zerreißtests zum Ermitteln von Festigkeitswerten durchgeführt. Untersuchungen wurden an Proben des Pressanfanges und des Pressendes durchgeführt. Auf diese Weise erhält man Aussagen über die sich einstellenden Festigkeitswerte in Abhängigkeit von der Presstemperatur. Typischerweise ist die Presstemperatur am Anfang des Pressvorganges etwas höher als beim Pressen des Endbereiches einer solchen Probenstange. Die untersuchten Proben der stranggepressten Stange führten zu folgenden Festigkeitswerten:

| Rp0,2 | Rm | A |
|---|---|---|
| [N/mm²] | [N/mm²] | [%] |
| 240-250 | 530-550 | 20-30 |

Die Schwankungsbreiten in den vorstehenden Angaben beruhen auf den Unterschieden in der Probenlage - Pressanfang bzw. Pressende. Bei diesem Ausführungsbeispiel resultieren die höheren Zugfestigkeitswerte von den Proben vom Pressende, während die niedrigeren Werte von Proben aus dem Pressanfang entstammen. Interessant ist bei diesem Ausführungsbeispiel, dass die höheren Werte der Bruchdehnung ebenfalls von den Proben des Pressendes entstammen. Dieses ist insofern unerwartet, da die Proben trotz höherer Festigkeit zugleich eine höhere Bruchdehnung aufweisen. Zu erwarten wäre, dass diese Proben sich bei der Bruchdehnung ebenso verhalten wie die Proben des Versuches 2.

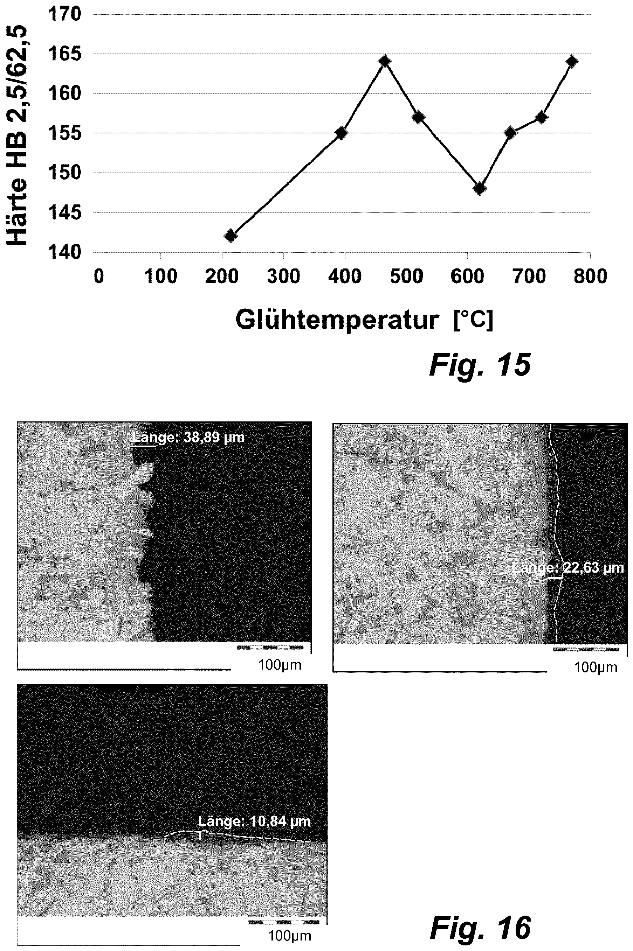

Figur 15 zeigt das Aushärtungsverhalten beim Glühen der aus dieser Legierung hergestellten Probe. Die Untersuchung wurde in derselben Weise durchgeführt, wie dieses zu der Probe gemäß Versuch 2 beschrieben ist. Dieses lässt deutlich werden, dass ein Aushärtungsmaximum bei etwa 470°C gegeben ist. Bei einem weiteren Temperaturanstieg ist eine Erweichung und ab etwa 620°C ein erneuter Anstieg der Härte zu beobachten.

Die Probe wurde zusammen mit Referenzproben Korrosionstests unterworfen.

Zum Zwecke der Korrosionstests wurden die Proben zur Hälfte eingetaucht in ein Gemisch aus Motoröl, 20% Bioethanol E85 (85% Ethanol) und Schwefelsäure. Der ph-Wert war auf 2,6 eingestellt. Die Versuche wurden bei 60°C durchgeführt. Die Probe wurde in diesem Gemisch 2 Tage gehalten, anschließend ausgebaut und lichtmikroskopisch ausgewertet.

Figur 16 zeigt den dem Korrosionstest unterworfene Probenanteil in mehreren Mikrofotografien. Die lichtmikroskopischen Aufnahmen der Figur 16 zeigt, dass nur ein sehr geringer Korrosionsangriff vorliegt und somit tiefer liegendes Material wirksam vor Korrosion verschont geblieben ist. Zu beobachten ist bei dieser Probe die Ausbildung einer die tiefer liegenden Bereiche vor Korrosion schützenden Deckschicht. In der Figur ist diese bezüglich ihrer Dicke markiert. Die Deckschicht ist in Figur 16 zum besseren Kenntlichmachen gestrichelt nachgezeichnet. Wie die Untersuchungen zeigen, ist diese Deckschicht gut haftend. Hervorzuheben ist, dass nicht nur die α-Phase, sondern auch die Korngrenzen und die β-Phase korrosionsresistent sind.

Die Probe wurde zusammen mit Referenzproben Korrosionstests unterworfen. Die Korrosionstests wurden durchgeführt, wie dieses bereits zu dem Versuch 1 erläutert ist. Als Referenzproben dienten dieselben Referenzproben wie bei dem Versuch 1. Diesbezüglich wird auf die Figuren 5 und 6 und die begleitenden Ausführungen verwiesen.

Die elektrische Leitfähigkeit der Probe aus dieser Legierung beträgt 10 MS/m und befindet sich daher in der Größenordnung der Vergleichslegierung CuZn37Mn3Al2PbSi.

### Versuch 4:

In einer zweiten Versuchsreihe wurde aus einer Legierung folgender Zusammensetzung:

| | Cu | Mn | Sn | Fe | Ni | Al | Si | Zn |
|---|---|---|---|---|---|---|---|---|
| Probe 4 | 55,5 | 2,0 | 1,7 | 0,4 | 0,05 | 0,05 | 0,5 | Rest |

Probestücke gegossen und anschließend stranggepresst.

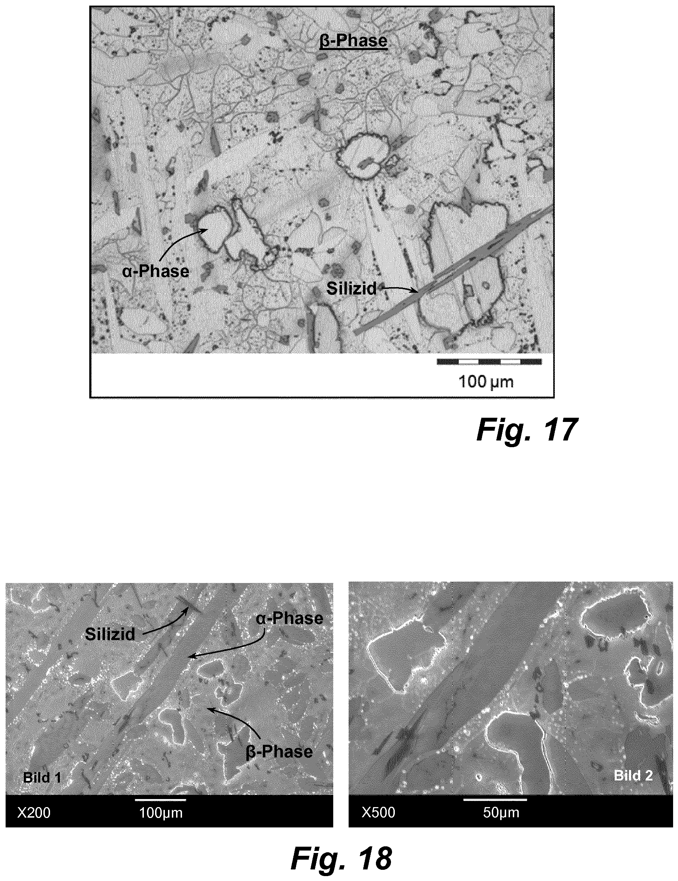

Die in Figur 17 gezeigte lichtmikroskopische Aufnahme der Gussprobe zeigt ein Gefüge aus β-Phase mit eingelagerter α-Phase und Siliziden. Die Silizide weisen in der gezeigten Schliffebene eine langgestreckte Form auf. Die Breite beträgt etwa 10 - 20µm.

Diese Legierung eignet sich besonders zum Herstellen von Legierungsprodukten, die warm umgeformt werden sollen.

Die in Figur 18 wiedergegebenen rasterelektronenmikroskopischen Aufnahmen der Probe lassen die nur relativ geringe Größe der Ausscheidungen erkennen.

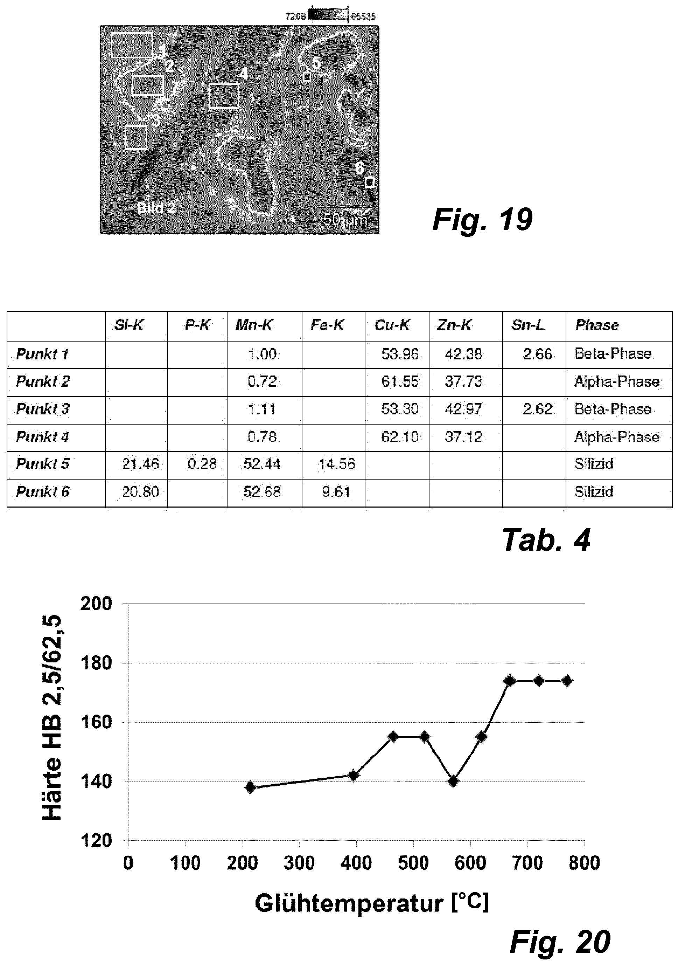

Figur 19 zeigt eine rasterelektronenmikroskopische Aufnahme an Bereichen der Proben der Figur 19 (Bild 2). Die Bereiche, in denen die EDX-Analysen aufgenommen worden sind, sind in Figur 19 kenntlich gemacht und in Tabelle 4 wiedergegeben.

Im Ergebnis kann festgestellt werden, dass Mangan überwiegend in α- und β-Phasen den Siliziden abgebunden ist, während Zinn in der β-Phase gelöst ist.

An einer stranggepressten Probe dieser Legierung wurden Härteuntersuchungen durchgeführt, und zwar in Bezug auf die Makrohärte und die Mikrohärte. Die Makrohärte wurde nach Brinell gemessen und führt zu einem Ergebnis von 121 - 126 HB 2,5/62,5. Die Mikrohärte wurde nach Vickers ermittelt. In der Matrix wurde eine Vickers-Härte von 97 HV 0.005 in der α-Phase und von 168 HV 0.005 in der β-Phase ermittelt. Die intermetallischen Phasen sind naturgemäß sehr viel härter. Hier wurden Härten von etwa 1070 HV 0.005 ermittelt.

An der stranggepressten Probe wurden Zerreißtests zum Ermitteln von Festigkeitswerten durchgeführt. Untersuchungen wurden an Proben des Pressanfanges und des Pressendes durchgeführt. Auf diese Weise erhält man Aussagen über die sich einstellenden Festigkeitswerte in Abhängigkeit von der Presstemperatur. Typischerweise ist die Presstemperatur am Anfang des Pressvorganges etwas höher als beim Pressen des Endbereiches einer solchen Probenstange. Die untersuchten Proben der stranggepressten Stange führten zu folgenden Festigkeitswerten:

| Rp0,2 | Rm | A |
|---|---|---|
| [N/mm²] | [N/mm²] | [%] |
| 260-270 | 520-550 | 15-25 |

Die Schwankungsbreiten in den vorstehenden Angaben beruhen auf den Unterschieden in der Probenlage - Pressanfang bzw. Pressende. Bei diesem Ausführungsbeispiel resultieren die höheren Zugfestigkeitswerte von den Proben vom Pressende, während die niedrigeren Werte von Proben aus dem Pressanfang entstammen. Interessant ist auch bei diesem Ausführungsbeispiel, dass die höheren Werte der Bruchdehnung ebenfalls von den Proben des Pressendes entstammen. Dieses ist insofern unerwartet, da die Proben trotz höherer Festigkeit zugleich eine höhere Bruchdehnung aufweisen. Zu erwarten wäre, dass diese Proben sich bei der Bruchdehnung ebenso verhalten wie die Proben des Versuches 2.

Figur 20 zeigt das Aushärtungsverhalten beim Glühen der aus dieser Legierung hergestellten Probe. Die Untersuchung wurde in derselben Weise durchgeführt, wie dieses zu der Probe gemäß Versuch 2 beschrieben ist. Dieses lässt deutlich werden, dass ein erstes Aushärtungsmaximum bei etwa 450°C - 510°C gegeben ist. Nach einer sich an dieses Aushärtungsmaximum anschließenden Erweichung wird bei etwa 670°C ein weiteres Aushärtungsmaximum erreicht.

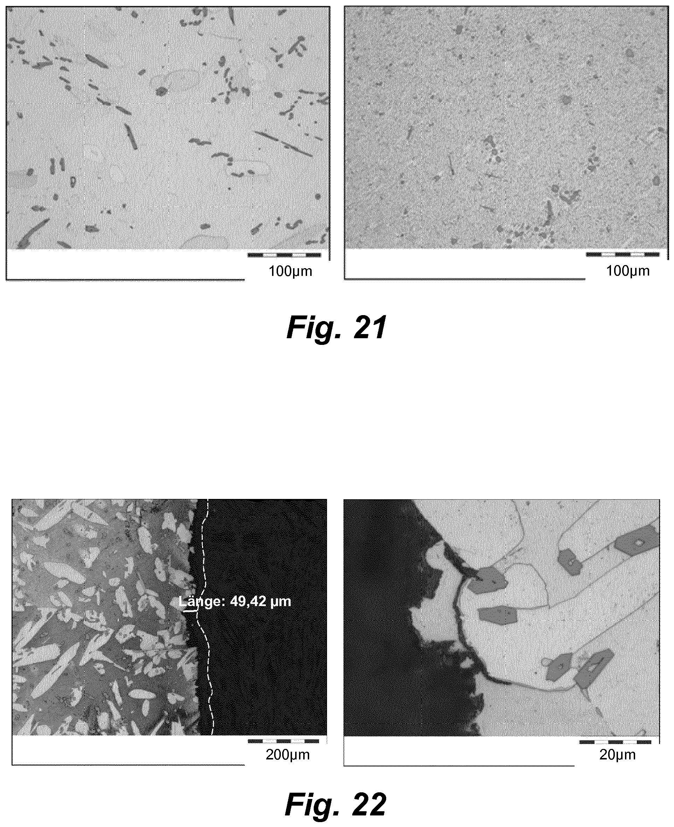

Figur 21 zeigt in einer Gegenüberstellung ein Gefügebild einer Probe aus der Legierung des Versuches 4 im Gefügezustand bei Erreichen eines Aushärtemaximums, und zwar bei 520°C (Bild links) und nach Erreichen des zweiten Aushärtemaximums, und zwar bei 770°C (Bild rechts). Diese Proben sind nach Erreichen der vorgenannten Temperatur in Wasser abgeschreckt worden, um das Gefüge der Glühtemperatur einzufrieren. Die Gegenüberstellung der beiden Gefügeaufnahmen macht deutlich, dass das Gefüge mit dem höheren Aushärtemaximum (Bild rechts) sehr viel feinkörniger ist. Dieses ist durch die sehr feinen Ausscheidungen der Hartphasen, insbesondere der Silizide, begründet. Die höhere Härte aufgrund der sehr feinkörnigen Hartphasenausscheidungen kann auch als Ausscheidungshärtung angesprochen werden.

Die Probe wurde zusammen mit Referenzproben Korrosionstests unterworfen. Die Korrosionstests wurden durchgeführt, wie dieses bereits zu dem Versuch 1 erläutert ist. Als Referenzproben dienten dieselben Referenzproben wie bei dem Versuch 1. Diesbezüglich wird auf die Figuren 5 und 6 und die begleitenden Ausführungen verwiesen.

Figur 22 zeigt zwei lichtmikroskopische Fotografien der Probe aus der zweiten Legierung nach der Korrosionsbehandlung. Eine Deckschichtbildung ist zu beobachten. Damit bleibt tieferliegendes Material vor Korrosion wirksam verschont. Die Deckschicht ist in dem linken Bild der Figur 21 gestrichelt nachgezeichnet. Neben der α-Phase sind auch bei dieser Probe die Korngrenzen und die β-Phase korrosionsresistent.

Die elektrische Leitfähigkeit der Probe aus dieser Legierung beträgt 10 MS/m und befindet sich daher in der Größenordnung der Vergleichslegierung CuZn37Mn3Al2PbSi.

## Patentansprüche

1. Bleifreie Sondermessinglegierung mit
50 - 65 Gew.-% Cu;
0,4 - 3 Gew.-% Mn;
0,55 - 3 Gew.-% Sn;
max. 1 Gew.-% Fe;
max. 1 Gew.-% Ni;
max. 1 Gew.-% Al;
max. 1,5 Gew.-% Si;
und Rest Zn nebst unvermeidbaren Verunreinigungen,.
wobei die Summe der Elemente Mn und Sn mindestens 1,3 Gew.-%
und maximal 6,0 Gew.-% beträgt.

2. Sondermessinglegierung nach Anspruch 1 mit
56 - 62 Gew.-% Cu;
1,5 - 2,3 Gew.-% Mn;
1,4 - 2,2 Gew.-% Sn;
0,1 - 0,7 Gew.-% Fe;
max. 0,3 Gew.-% Ni;
max. 0,5 Gew.-% Al oder max. 0,7 Gew.-% Al;
0,25 - 0,85 Gew.-% Si;
und Rest Zn nebst unvermeidbaren Verunreinigungen.

3. Sondermessinglegierung nach Anspruch 2 mit
57 - 61,5 Gew.-% Cu;
1,7 - 2,2 Gew.-% Mn;
1,5 - 2,1 Gew.-% Sn;
0,1 - 0,7 Gew.-% Fe;
max. 0,3 Gew.-% Ni;
max. 0,5 Gew.-% Al oder max. 0,7 Gew.-% Al;
0,3 - 0,7 Gew.-% Si;
und Rest Zn nebst unvermeidbaren Verunreinigungen.

4. Sondermessinglegierung nach Anspruch 2 oder 3, **dadurch gekennzeichnet, dass** an der Legierung die Elemente Mn und Sn in einem Verhältnis von 0,95 bis 1,15 Mn zu Sn beteiligt sind.

5. Sondermessinglegierung nach Anspruch 4, **dadurch gekennzeichnet, dass** der Mn-Gehalt zwischen 8% und 15% größer ist als der Sn-Gehalt.

6. Sondermessinglegierung nach Anspruch 1 mit
57 - 61,5 Gew.-% Cu;
1,7 - 2,2 Gew.-% Mn;
0,6 - 1,2 Gew.-% Sn;
0,1 - 0,7 Gew.-% Fe;
max. 0,3 Gew.-% Ni;
max. 0,5 Gew.-% Al oder max. 0,7 Gew.-% Al;
0,3 - 0,7 Gew.-% Si;
und Rest Zn nebst unvermeidbaren Verunreinigungen.

7. Sondermessinglegierung nach Anspruch 6, **dadurch gekennzeichnet, dass** an der Legierung die Elemente Mn und Sn in einem Verhältnis von 1,65 bis 1,9 Mn zu Sn beteiligt sind.

8. Sondermessinglegierung nach Anspruch 7, **dadurch gekennzeichnet, dass** der Mn-Gehalt zwischen 60% und 85% größer ist als der Sn-Gehalt.

9. Sondermessinglegierung nach einem der Ansprüche 2 bis 8, **dadurch gekennzeichnet, dass** der Fe-Gehalt 0,3 bis 0,5 Gew.-% beträgt.

10. Sondermessinglegierung nach einem der Ansprüche 2 bis 5, **dadurch gekennzeichnet, dass** der Sn-Gehalt 1,9 - 2,1 Gew.-% beträgt.

11. Sondermessinglegierung nach Anspruch 6, **dadurch gekennzeichnet, dass** der Sn-Gehalt 0,9 - 1,1 Gew.-% beträgt.

12. Sondermessinglegierung nach einem der Ansprüche 2 bis 11, **dadurch gekennzeichnet, dass** der Mn-Gehalt zwischen 1,9 - 2,1 Gew.-% beträgt.

13. Sondermessinglegierung nach Anspruch 1 mit
52 - 59 Gew.-% Cu;
1,5 - 2,7 Gew.-% Mn;
0,55 - 2,5 Gew.-% Sn;
0,1 - 1 Gew.-% Fe;
max. 0,2 Gew.-% Ni;
max. 0,3 Gew.-% Al;
0,15 - 1 Gew.-% Si;
und Rest Zn nebst unvermeidbaren Verunreinigungen.

14. Sondermessinglegierung nach Anspruch 13 mit
53 - 59 Gew.-% Cu;
1,6 - 2,5 Gew.-% Mn;
0,55 - 1,4 Gew.-% Sn;
0,1 - 1 Gew.-% Fe;
max. 0,2 Gew.-% Ni;
max. 0,3 Gew.-% Al;
0,15 - 1 Gew.-% Si;
und Rest Zn nebst unvermeidbaren Verunreinigungen.

15. Sondermessinglegierung nach Anspruch 14, **dadurch gekennzeichnet, dass** an der Legierung die Elemente Mn und Sn in einem Verhältnis von 1,65 bis 1,9 Mn zu Sn beteiligt sind.

16. Sondermessinglegierung nach Anspruch 13 mit
53 - 59 Gew.-% Cu;
1,6 - 2,5 Gew.-% Mn;
1,2 - 2,2 Gew.-% Sn;
0,1 - 1 Gew.-% Fe;
max. 0,2 Gew.-% Ni;
max. 0,3 Gew.-% Al;
0,15 - 1 Gew.-% Si;
und Rest Zn nebst unvermeidbaren Verunreinigungen.

17. Sondermessinglegierung nach Anspruch 13, **dadurch gekennzeichnet, dass** an der Legierung die Elemente Mn und Sn in einem Verhältnis von 1,0 bis 1,25 Mn zu Sn beteiligt sind.

18. Sondermessinglegierung nach Anspruch 14, **dadurch gekennzeichnet, dass** der Sn-Gehalt 0,6 - 1,3 Gew.-% beträgt.

19. Sondermessinglegierung nach Anspruch 16, **dadurch gekennzeichnet, dass** der Sn-Gehalt 1,3 - 2,1 Gew.-% beträgt.

20. Sondermessinglegierungsprodukt, hergestellt aus einer Sondermessinglegierung nach Anspruch 14, **dadurch gekennzeichnet, dass** das stranggepresste Sondermessinglegierungsprodukt Zugfestigkeitswerte Rp0,2 zwischen 240 und 250 N/mm² und Rₘ zwischen 530 und 550 N/mm² sowie eine Bruchdehnung zwischen 20% und 30% aufweist, wobei diejenigen Sondermessinglegierungsprodukte mit höheren Zugfestigkeitswerten zugleich eine höhere Bruchdehnung aufweisen.

21. Sondermessinglegierungsprodukt, hergestellt aus einer Sondermessinglegierung nach Anspruch 16, **dadurch gekennzeichnet, dass** das stranggepresste Sondermessinglegierungsprodukt Zugfestigkeitswerte Rp0,2 zwischen 260 und 270 N/mm² und Rₘ zwischen 520 und 550 N/mm² sowie eine Bruchdehnung zwischen 15% und 25% aufweist, wobei diejenigen Sondermessinglegierungsprodukte mit höheren Zugfestigkeitswerten zugleich eine höhere Bruchdehnung aufweisen.

22. Sondermessinglegierungsprodukt, hergestellt aus einer Sondermessinglegierung nach einem der Ansprüche 1 bis 19, **dadurch gekennzeichnet, dass** die elektrische Leitfähigkeit kleiner als 12 MS/m ist.

23. Sondermessinglegierungsprodukt, hergestellt aus einer Sondermessinglegierung nach einem der Ansprüche 1 bis 19, **dadurch gekennzeichnet, dass** es sich bei diesem Legierungsprodukt um ein Lagerteil handelt, vorzugsweise zum Einsatz in einem Lager in einer Ölumgebung.

24. Sondermessinglegierungsprodukt nach Anspruch 23, **dadurch gekennzeichnet, dass** es sich bei dem Lagerteil um ein Teil für ein Turboladerlager handelt.

## Claims

1. Lead-free special brass alloy with
50-65 % by weight Cu;
0.4-3 % by weight Mn;
0.55-3 % by weight Sn;
max. 1 % by weight Fe;
max 1 % by weight Ni;
max. 1 % by weight Al;
max. 1.5 % by weight Si;
and the remainder Zn together with unavoidable impurities,
wherein the total of the elements Mn and Sn amounts to at least 1.3 % by weight and maximum 6.0 % by weight.

2. Special brass alloy according to claim 1 with
56-62 % by weight Cu;
1.5-2.3 % by weight Mn;
1.4-2.2 % by weight Sn;
0.1-0.7 % by weight Fe;
max 0.3 % by weight Ni;
max. 0.5 % by weight Al or max. 0.7 % by weight Al;
0.25-0.85 % by weight Si;
and the remainder Zn together with unavoidable impurities.

3. Special brass alloy according to claim 2 with
57-61.5 % by weight Cu;
1.7-2.2 % by weight Mn;
1.5-2.1 % by weight Sn;
0.1-0.7 % by weight Fe;
max 0.3 % by weight Ni;
max. 0.5 % by weight Al or max. 0.7 % by weight Al;
0.3-0.7 % by weight Si;
and the remainder Zn together with unavoidable impurities.

4. Special brass alloy according to claim 2 or 3, **characterised in that** the elements Mn and Sn are present in the alloy in a proportion of 0.95 to 1.15 Mn to Sn.

5. Special brass alloy according to claim 4, **characterised in that** the Mn content is between 8% and 15% greater than the Sn content.

6. Special brass alloy according to claim 1 with
57-61.5 % by weight Cu;
1.7-2.2 % by weight Mn;
0.6-1.2 % by weight Sn;
0.1-0.7 % by weight Fe;
max 0.3 % by weight Ni;
max. 0.5 % by weight Al or max. 0.7 % by weight Al;
0.3-0.7 % by weight Si;
and the remainder Zn together with unavoidable impurities.

7. Special brass alloy according to claim 6, **characterised in that** the elements Mn and Sn are present in the alloy in a proportion of 1.65 to 1.9 Mn to Sn.

8. Special brass alloy according to claim 7, **characterised in that** the Mn content is between 60% and 85% greater than the Sn content.

9. Special brass alloy according to any one of claims 2 to 8, **characterised in that** the Fe content is 0.3 - 0.5 % by weight.

10. Special brass alloy according to any one of claims 2 to 5, **characterised in that** the Sn content is 1.9 - 2.1 % by weight.

11. Special brass alloy according to claim 6, **characterised in that** the Sn content is 0.9 - 1.1 % by weight.

12. Special brass alloy according to any one of claims 2 to 11, **characterised in that** the Mn content is between 1.9 - 2.1 % by weight.

13. Special brass alloy according to claim 1 with
52-59 % by weight Cu;
1.5-2.7 % by weight Mn;
0.55-2.5 % by weight Sn;
0.1-1 % by weight Fe;
max 0.2 % by weight Ni;
max. 0.3 % by weight Al;
0.15-1 % by weight Si;
and the remainder Zn together with unavoidable impurities.

14. Special brass alloy according to claim 13 with
53-59 % by weight Cu;
1.6-2.5 % by weight Mn;
0.55-1.4 % by weight Sn;
0.1-1 % by weight Fe;
max 0.2 % by weight Ni;
max. 0.3 % by weight Al;
0.15-1 % by weight Si;
and the remainder Zn together with unavoidable impurities.

15. Special brass alloy according to claim 14, **characterised in that** the elements Mn and Sn are present in the alloy in a proportion of 1.65 to 1.9 Mn to Sn.

16. Special brass alloy according to claim 13 with
53-59 % by weight Cu;
1.6-2.5 % by weight Mn;
1.2-2.2 % by weight Sn;
0.1-1 % by weight Fe;
max 0.2 % by weight Ni;
max. 0.3 % by weight Al;
0.15-1 % by weight Si;
and the remainder Zn together with unavoidable impurities.

17. Special brass alloy according to claim 13, **characterised in that** the elements Mn and Sn are present in the alloy in a proportion of 1.0 to 1.25 Mn to Sn.

18. Special brass alloy according to claim 14, **characterised in that** the Sn content is 0.6-1.3 % by weight.

19. Special brass alloy according to claim 16, **characterised in that** the Sn content is 1.3-2.1 % by weight.

20. Special brass alloy product, produced from a special brass alloy according to claim 14, **characterised in that** the extruded special brass alloy product exhibits tensile strength values Rp0.2 of between 240 and 250 N/mm² and Rm of between 530 and 550 N/mm² and an elongation after fracture of between 20% and 30%, wherein those special brass alloy products with higher tensile strength values exhibit at the same time a higher elongation after fracture.

21. Special brass alloy product, produced from a special brass alloy according to claim 16, **characterised in that** the extruded special brass alloy product exhibits tensile strength values Rp0.2 of between 260 and 270 N/mm² and Rm of between 520 and 550 N/mm² and an elongation after fracture of between 15% and 25%, wherein those special brass alloy products with higher tensile strength values exhibit at the same time a higher elongation after fracture.

22. Special brass alloy product, produced from a special brass alloy according to any one of claims 1 to 19, **characterised in that** the electrical conductivity is less than 12 MS/m.

23. Special brass alloy product, produced from a special brass alloy according to any one of claims 1 to 19, **characterised in that** this alloy product is a bearing part, preferably for use in a bearing in an oil environment.

24. Special brass alloy product according to claim 23, **characterised in that** the bearing part is a part for a turbo charger bearing.

## Revendications

1. Alliage de laiton spécial sans plomb comportant
50 à 65 % de poids de Cu ;
0,4 à 3 % de poids de Mn ;
0,55 à 3 % de poids de Sn ;
max. 1 % de poids de Fe ;
max. 1 % de poids de Ni ;
max. 1 % de poids d'Al ;
max. 1,5 % de poids de Si ;
et le reste de Zn auxquels s'ajoutent les inévitables impuretés, la somme des éléments Mn et Sn représentant au moins 1,3 % de poids et au maximum 6,0 % de poids.

2. Alliage de laiton spécial selon la revendication 1 comportant
56 à 62 % de poids de Cu ;
1,5 à 2,3 % de poids de Mn ;
1,4 à 2,2 % de poids de Sn ;
0,1 à 0,7 % de poids de Fe ;
max. 0,3 % de poids de Ni ;
max. 0,5 % de poids d'Al ou max. 0,7 % de poids d'Al ;
0,25 à 0,85 % de poids de Si ;
et le reste de Zn auxquels s'ajoutent les inévitables impuretés.

3. Alliage de laiton spécial selon la revendication 2 comportant
57 à 61,5 % de poids de Cu ;
1,7 à 2,2 % de poids de Mn ;
1,5 à 2,1 % de poids de Sn ;
0,1 à 0,7 % de poids de Fe ;
max. 0,3 % de poids de Ni ;
max. 0,5 % de poids d'Al ou max. 0,7 % de poids d'Al ;
0,3 à 0,7 % de poids de Si ;
et le reste de Zn auxquels s'ajoutent les inévitables impuretés.

4. Alliage de laiton spécial selon la revendication 2 ou 3, **caractérisé en ce que** les éléments Mn et Sn sont impliqués dans l'alliage selon une proportion de 0,95 à 1,15 de Mn par rapport à Sn.

5. Alliage de laiton spécial selon la revendication 4, **caractérisé en ce que** la teneur en Mn est supérieure de 8 à 15 % à la teneur en Sn.

6. Alliage de laiton spécial selon la revendication 1 comportant
57 à 61,5 % de poids de Cu ;
1,7 à 2,2 % de poids de Mn ;
0,6 à 1,2 % de poids de Sn ;
0,1 à 0,7 % de poids de Fe ;
max. 0,3 % de poids de Ni ;
max. 0,5 % de poids d'Al ou max. 0,7 % de poids d'Al ;
0,3 à 0,7 % de poids de Si ;
et le reste de Zn auxquels s'ajoutent les inévitables impuretés.

7. Alliage de laiton spécial selon la revendication 6, **caractérisé en ce que** les éléments Mn et Sn sont impliqués dans l'alliage selon une proportion de 1,65 à 1,9 de Mn par rapport à Sn.

8. Alliage de laiton spécial selon la revendication 7, **caractérisé en ce que** la teneur en Mn est supérieure de 60 à 85 % à la teneur en Sn.

9. Alliage de laiton spécial selon l'une des revendications 2 à 8, **caractérisé en ce que** la teneur en Fe représente 0,3 à 0,5 % de poids.

10. Alliage de laiton spécial selon l'une des revendications 2 à 5, **caractérisé en ce que** la teneur en Sn représente 1,9 à 2,1 % de poids.

11. Alliage de laiton spécial selon la revendication 6, **caractérisé en ce que** la teneur en Sn représente 0,9 à 1,1 % de poids.

12. Alliage de laiton spécial selon l'une des revendications 2 à 11, **caractérisé en ce que** la teneur en Mn représente 1,9 à 2,1 de % de poids.

13. Alliage de laiton spécial selon la revendication 1 comportant
52 à 59 % de poids de Cu ;
1,5 à 2,7 % de poids de Mn ;
0,55 à 2,5 % de poids de Sn ;
0,1 à 1 % de poids de Fe ;
max. 0,2 % de poids de Ni ;
max. 0,3 % de poids d'Al ;
0,15 à 1 % de poids de Si ;
et le reste de Zn auxquels s'ajoutent les inévitables impuretés.

14. Alliage de laiton spécial selon la revendication 13 comportant
53 à 59 % de poids de Cu ;
1,6 à 2,5 % de poids de Mn ;
0,55 à 1,4 % de poids de Sn ;
0,1 à 1 % de poids de Fe ;
max. 0,2 % de poids de Ni ;
max. 0,3 % de poids d'Al ;
0,15 à 1 % de poids de Si ;
et le reste de Zn auxquels s'ajoutent les inévitables impuretés.

15. Alliage de laiton spécial selon la revendication 14, **caractérisé en ce que** les éléments Mn et Sn sont impliqués dans l'alliage selon une proportion de 1,65 à 1,9 de Mn par rapport à Sn.

16. Alliage de laiton spécial selon la revendication 13 comportant
53 à 59 % de poids de Cu ;
1,6 à 2,5 % de poids de Mn ;
1,2 à 2,2 % de poids de Sn ;
0,1 à 1 % de poids de Fe ;
max. 0,2 % de poids de Ni ;
max. 0,3 % de poids d'Al ;
0,15 à 1 % de poids de Si ;
et le reste de Zn auxquels s'ajoutent les inévitables impuretés.

17. Alliage de laiton spécial selon la revendication 13, **caractérisé en ce que** les éléments Mn et Sn sont impliqués dans l'alliage selon une proportion de 1,0 à 1,25 de Mn par rapport à Sn.

18. Alliage de laiton spécial selon la revendication 14, **caractérisé en ce que** la teneur en Sn représente 0,6 à 1,3 % de poids.

19. Alliage de laiton spécial selon la revendication 16, **caractérisé en ce que** la teneur en Sn représente 1,3 à 2,1 % de poids.

20. Produit en alliage de laiton spécial, fabriqué en alliage de laiton spécial selon la revendication 14, **caractérisé en ce que** le produit filé en alliage de laiton spécial présente des valeurs de résistance Rp0,2 situées entre 240 et 250 N/mm² et Rm entre 530 et 550 N/mm² ainsi qu'un allongement à la rupture situé entre 20 % et 30 %, lesquels produits d'alliage de laiton spécial avec des valeurs de résistance plus élevées présentant simultanément un allongement à la rupture plus élevé.

21. Produit en alliage de laiton spécial, fabriqué en alliage de laiton spécial selon la revendication 16, **caractérisé en ce que** le produit filé en alliage de laiton spécial présente des valeurs de résistance Rp0,2 situées entre 260 et 270 N/mm² et Rm entre 520 et 550 N/mm² ainsi qu'un allongement à la rupture situé entre 15 % et 25 %, lesquels produits d'alliage de laiton spécial avec des valeurs de résistance plus élevées présentant simultanément un allongement à la rupture plus élevé.

22. Produit en alliage de laiton spécial, fabriqué en alliage de laiton spécial selon l'une des revendications 1 à 19, **caractérisé en ce que** la conductivité électrique est inférieure à 12 MS/m.

23. Produit en alliage de laiton spécial, fabriqué en alliage de laiton spécial selon l'une des revendications 1 à 19, **caractérisé en ce que** ce produit en alliage est une pièce de palier, utilisée de façon privilégiée dans un palier dans un environnement d'huile.

24. Produit en alliage de laiton spécial selon la revendication 23, **caractérisé en ce que** la pièce de palier est une pièce pour un palier de turbocompresseur.
